# EUROPÄISCHE PATENTSCHRIFT

(11) **EP 4 536 454 B1**
(45) Veröffentlichungstag und Bekanntmachung des Hinweises auf die Patenterteilung: **02.12.2026**
(21) Anmeldenummer: 23732885.1
(22) Anmeldetag: 12.06.2023
(51) Int. Cl.: B23C 1/12, B23C 1/20, B23C 3/30, B27C 3/04, B27C 3/06, B27C 5/10, B27C 9/04

(54) **HANDGEHALTENE FRÄSVORRICHTUNG UND VERFAHREN**
HAND-HELD CONNECTOR MILLING MACHINE AND METHOD
FRAISEUSE PORTATIVE DE CONNECTEURS ET PROCÉDÉ

(30) Priorität: 10.06.2022 DE 102022205896
(43) Veröffentlichungstag der Anmeldung: 16.04.2025
(73) Patentinhaber: Festool GmbH, 73240 Wendlingen am Neckar (DE)
(72) Erfinder: ALLGAIER, Benjamin, 72587 Römerstein (DE); ROMMEL, Vitus, 73252 Lenningen (DE); TENTER, Matthias, 73732 Esslingen am Neckar (DE)
(74) Vertreter: Patentanwälte Magenbauer & Kollegen Partnerschaft mbB
(86) Internationale Anmeldenummer: PCT/EP2023/065674
(87) Internationale Veröffentlichungsnummer: WO 2023/237782

(56) Entgegenhaltungen:
- EP-A2- 1 462 228

## Beschreibung

Die Erfindung betrifft eine handgehaltene Fräsvorrichtung zur Herstellung einer Vertiefung in einem Werkstück, umfassend einen Handgriff zum Greifen der Fräsvorrichtung und zum Positionieren der Fräsvorrichtung relativ zu dem Werkstück. Die Erfindung betrifft ferner ein Verfahren zum Betrieb der handgehaltenen Fräsvorrichtung.

Aus der EP 1 462 228 A2 ist eine Fräsmaschine zum Fräsen von Langlöchern bekannt. Ein Motorgehäuse kann als Handgriff beim Vorschieben der Antriebseinheit verwendet werden. An einem Grundkörper sind mehrere Anlageflächen angeordnet. Mit einer vorderseitigen Anlagefläche kann der Grundkörper an eine Werkstückfläche angelegt werden, in die ein Langloch gefräst werden soll. Eine Anlageplatte bildet eine schwenkbare Anlagefläche. Ein Antriebsmotor treibt eine Abtriebswelle an. Der Abtriebswelle ist eine sie zu einer ihrer Rotationsbewegung überlagerten Hin- und Herbewegung antreibenden Querantriebseinrichtung zugeordnet.

Eine Aufgabe der Erfindung besteht darin, eine flexibel einsetzbare Fräsvorrichtung bereitzustellen.

Die Aufgabe wird gelöst durch eine Fräsvorrichtung gemäß Anspruch 1.

Die Fräsvorrichtung umfasst eine Anlageeinrichtung mit einer Anlagestruktur, die einen ersten Strukturabschnitt und einen zweiten Strukturabschnitt zur gleichzeitigen stationären Anlage an dem Werkstück während der Herstellung der Vertiefung umfasst, wobei der erste Strukturabschnitt eine erste Anlageebene definiert und der zweite Strukturabschnitt eine zweite Anlageebene definiert, und wobei der zweite Strukturabschnitt relativ zum ersten Strukturabschnitt verschwenkbar gelagert und in einer Mehrzahl an verschiedenen Schwenkpositionen relativ zum ersten Strukturabschnitt fixierbar ist, um zwischen den Anlageebenen einen an das Werkstück angepassten festen Winkel einzustellen. Die Fräsvorrichtung umfasst ferner ein Fräswerkzeug sowie eine elektrische Antriebseinrichtung, die ausgebildet ist, das Fräswerkzeug in eine rotative Abtragungsbewegung zu versetzen. Die Fräsvorrichtung umfasst ferner eine elektrische Positioniereinrichtung, die ausgebildet ist, das Fräswerkzeug entlang wenigstens zweier insbesondere linearer Positionier-Freiheitsgrade relativ zu der Anlagestruktur zu verfahren, sowie eine elektronische Steuereinheit, die ausgebildet ist, die elektrische Positioniereinrichtung gemäß einer Bewegungsinformation anzusteuern, so dass die elektrische Positioniereinrichtung das Fräswerkzeug in eine durch die Bewegungsinformation definierte Bewegungsabfolge entlang der wenigstens zwei Positionier-Freiheitsgrade versetzt, während das Fräswerkzeug die rotative Abtragungsbewegung durchführt, um die Vertiefung mit einer vorgegebenen Vertiefung-Geometrie herzustellen. Die Vertiefung-Geometrie wird insbesondere durch die Bewegungsabfolge vorgegeben, vorzugsweise wenigstens in Bezug auf die wenigstens zwei Positionier-Freiheitsgrade.

Bei der beschriebenen Fräsvorrichtung wird die Vertiefung-Geometrie der herzustellenden Vertiefung durch die Bewegungsinformation bestimmt. Die Fräsvorrichtung ist insbesondere eine (handgehaltene) CNC-Maschine und kann auch als (handgehaltene) CNC-Fräsvorrichtung bezeichnet werden. Mittels einer entsprechend angepassten Bewegungsinformation kann die Vertiefung-Geometrie der herzustellenden Vertiefung in einfacher Weise angepasst werden, insbesondere derart, dass beispielsweise an einer schmalen Seite des Werkstücks eine entsprechend schmale Vertiefung herstellbar ist. Durch die Anlageeinrichtung mit dem zwischen den Anlageebenen einstellbaren Winkel kann gewährleistet werden, dass die Fräsvorrichtung während der Herstellung der Vertiefung stationär und stabil an das Werkstück angelegt werden kann, insbesondere in dem Fall, in dem die Vertiefung an der schmalen Seite des Werkstücks hergestellt wird. In diesem Fall kann das Risiko bestehen, dass eine Anlage der Anlagestruktur, beispielsweise des ersten Strukturabschnitts, an der schmalen Seite alleine nicht ausreicht, um zu gewährleisten, dass die Fräsvorrichtung während der Herstellung der Vertiefung stationär und stabil an dem Werkstück angelegt bleibt. Der zweite Strukturabschnitt kann in diesem Fall entsprechend verschwenkt und an einer weiteren (insbesondere größeren) Seite des Werkstücks angelegt werden, um dadurch die stabile und stationäre Anlage der Fräsvorrichtung an dem Werkstück während der Herstellung der Vertiefung zu gewährleisten.

Vorteilhafte Weiterbildungen sind Gegenstand der Unteransprüche.

Die Erfindung betrifft ferner ein Verfahren zum Betrieb der handgehaltenen Fräsvorrichtung, umfassend die Schritte:
- Positionieren der Fräsvorrichtung an dem Werkstück, so dass die Fräsvorrichtung während der Herstellung der Vertiefung gleichzeitig mit beiden Strukturabschnitten stationär an dem Werkstück anliegt,
- Ansteuern der elektrischen Positioniereinrichtung gemäß der Bewegungsinformation, so dass die elektrische Positioniereinrichtung das Fräswerkzeug in die Bewegungsabfolge versetzt, während das Fräswerkzeug die rotative Abtragungsbewegung durchführt, um die Vertiefung mit der durch die Bewegungsabfolge vorgegebenen Vertiefung-Geometrie herzustellen.

Das Verfahren ist zweckmäßigerweise in Entsprechung zu einer beschriebenen Ausführungsform der handgehaltenen Fräsvorrichtung ausgebildet.

Weitere exemplarische Details sowie beispielhafte Ausführungsformen werden nachstehend unter Bezugnahme auf die Figuren erläutert. Dabei zeigt
- Figur 1: eine perspektivische Darstellung einer handgehaltenen Fräsvorrichtung gemäß einer ersten Ausführungsform,

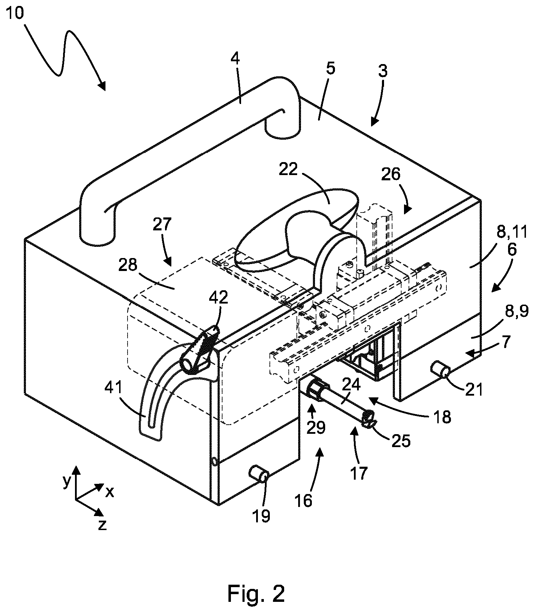

- Figur 2: eine weitere perspektivische Darstellung der handgehaltenen Fräsvorrichtung, wobei eine innerhalb eines Gehäuses befindliche Antriebseinrichtung und Positioniereinrichtung durch gestrichelte Linien dargestellt sind,

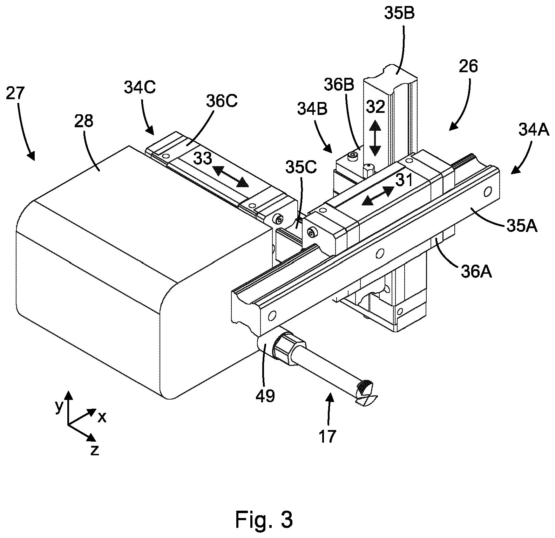

- Figur 3: ein Aufbau aus der Antriebseinrichtung, Positioniereinrichtung und einem Fräswerkzeug der handgehaltenen Fräsvorrichtung
- Figur 4: eine schematische Schnittansicht der Fräsvorrichtung von oben,
- Figur 5: eine schematische Seitenansicht der Fräsvorrichtung, wobei die Fräsvorrichtung an einem Werkstück angelegt ist,
- Figur 6: eine perspektivische Darstellung einer handgehaltenen Fräsvorrichtung gemäß einer zweiten Ausführungsform,
- Figur 7: eine weitere perspektivische Darstellung der Fräsvorrichtung gemäß der zweiten Ausführungsform,
- Figur 8: eine Schnittansicht der Fräsvorrichtung gemäß der zweiten Ausführungsform von unten, und
- Figur 9: eine Schnittansicht der Fräsvorrichtung gemäß der zweiten Ausführungsform von der Seite,
- Figur 10: eine Werkstückanordnung in einer Explosionsdarstellung mit zwei Werkstücken, einem Dreh-Verbinder und zwei Flachdübeln,
- Figur 11: eine Werkstückanordnung in einer Explosionsdarstellung mit zwei Werkstücken, einem Dreh-Verbinder und zwei Runddübeln,
- Figur 12: eine Werkstückanordnung in einer Explosionsdarstellung mit zwei Werkstücken und einem Kinematik-Verbinder,
- Figur 13: eine Werkstückanordnung in einem zusammengesetzten Zustand,
- Figur 14: eine perspektivische Schnittdarstellung der Werkstückanordnung in dem zusammengesetzten Zustand, wobei der Schnitt durch die in der Figur 13 gezeigte Schnittebene X verläuft und kein Verbinder gezeigt ist,
- Figur 15: eine Seitenansicht der Schnittdarstellung,
- Figur 16: eine Detailansicht der Schnittdarstellung, wobei ein Verbinder gezeigt ist.

Bei den nachfolgenden Erläuterungen wird Bezug genommen auf die drei orthogonal zueinander ausgerichteten Raumrichtungen x-Richtung, y-Richtung und z-Richtung. Die x-Richtung soll auch als Breitenrichtung x, die y-Richtung als Querrichtung y und die z-Richtung als Tiefenrichtung z bezeichnet werden. Diese Richtungen beziehen sich auf die Fräsvorrichtung 10 und drehen sich dementsprechend bei einer Rotation der Fräsvorrichtung 10 mit dieser mit. Die Tiefenrichtung z verläuft zweckmäßigerweise in Richtung einer Drehachse einer rotativen Abtragungsbewegung eines Fräswerkzeugs 17 der Fräsvorrichtung 10. Die Breitenrichtung x und die Querrichtung y verlaufen jeweils orthogonal zur Drehachse der rotativen Abtragungsbewegung.

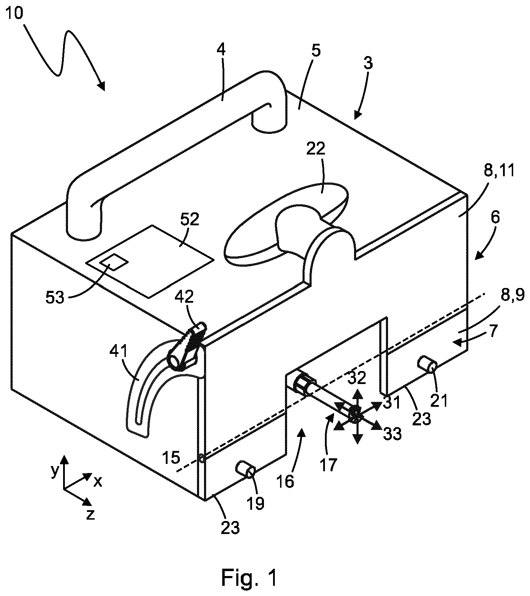

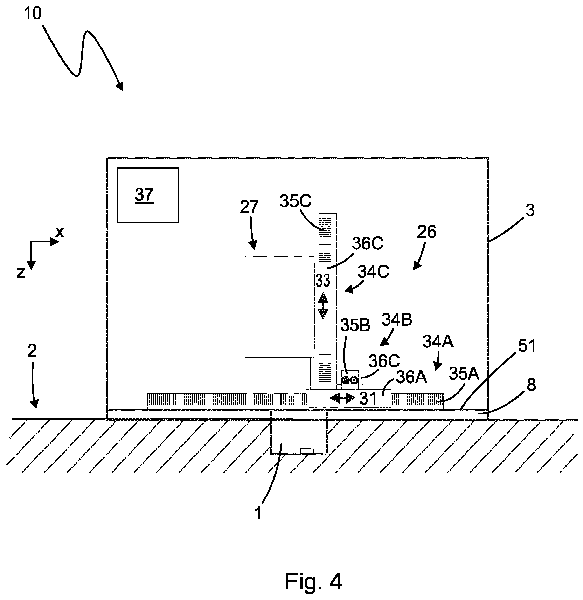

Die Figur 1 zeigt eine exemplarische Ausgestaltung der handgehaltenen Fräsvorrichtung 10 gemäß einer ersten Ausführungsform. Die Fräsvorrichtung 10 dient zur Herstellung einer Vertiefung 1 in einem Werkstück 2 (siehe z.B. Figur 4). Mit dem Begriff "handgehaltene Fräsvorrichtung" ist insbesondere gemeint, dass die gesamte Fräsvorrichtung während der Herstellung der Vertiefung 1 von einem Benutzer händisch gehalten wird. Die Fräsvorrichtung 10 ist insbesondere derart dimensioniert und/oder ausgeführt, dass die gesamte Fräsvorrichtung 10 von einer einzelnen Person händisch getragen werden kann. Beispielsweise wiegt die Fräsvorrichtung 10 weniger als 20 kg oder weniger als 15 kg oder weniger als 10 kg oder weniger als 5 kg.

Die Fräsvorrichtung 10 umfasst ein Gehäuse 3, das insbesondere das Außengehäuse der Fräsvorrichtung 10 darstellt. Das Gehäuse 3 hat exemplarisch eine quaderförmige Grundgestalt.

Die Fräsvorrichtung 10 umfasst einen Handgriff 4, der exemplarisch an einer ersten Seite 5 der Fräsvorrichtung 10 angeordnet ist. Die erste Seite 5 kann auch als Handgriff-Seite bezeichnet werden und ist exemplarisch orthogonal zu der Querrichtung y ausgerichtet. Die erste Seite 5 wird exemplarisch durch eine Wand des Gehäuses 3 gebildet. Der Handgriff 4 dient zum Greifen der Fräsvorrichtung 10 und zum Positionieren der Fräsvorrichtung 10 relativ zu dem Werkstück 2. Der Handgriff 4 ist exemplarisch bügelförmig ausgeführt. Exemplarisch ist der Handgriff 4 mit seiner Längsachse parallel zu der Breitenrichtung x ausgerichtet. Alternativ kann der Handgriff 4 mit seiner Längsachse parallel zu der Tiefenrichtung z ausgerichtet sein. Ferner kann der Handgriff auch anders ausgestaltet sein. Bevorzugt ist der Handgriff 4 integral mit dem Gehäuse 3 ausgeführt.

Bevorzugt ist die Erstreckung des Gehäuses 3 (insbesondere ohne Berücksichtigung sämtlicher Handgriffe der Fräsvorrichtung 10) in Breitenrichtung x größer als die Erstreckung des Gehäuses 3 (insbesondere ohne Berücksichtigung sämtlicher Handgriffe der Fräsvorrichtung 10) in Tiefenrichtung z. Bevorzugt ist die Erstreckung der Fräsvorrichtung 10 ohne Berücksichtigung sämtlicher Handgriffe der Fräsvorrichtung 10 in Breitenrichtung x größer als in Tiefenrichtung z.

Die Fräsvorrichtung 10 umfasst eine Anlageeinrichtung 6, die exemplarisch an einer zweiten Seite 7 der Fräsvorrichtung 10 vorhanden ist. Die zweite Seite 7 kann auch als Anlage-Seite bezeichnet werden und ist exemplarisch orthogonal zu der Tiefenrichtung z ausgerichtet. Die Anlageeinrichtung 6 verfügt über eine Anlagestruktur 8, die einen ersten Strukturabschnitt 9 und einen zweiten Strukturabschnitt 11 umfasst. Der zweite Strukturabschnitt 11 schließt sich exemplarisch an den ersten Strukturabschnitt 9 in Querrichtung y an. Der erste Strukturabschnitt 9 und der zweite Strukturabschnitt 11 dienen zur gleichzeitigen stationären Anlage an dem Werkstück 2 während der Herstellung der Vertiefung 1. Der erste Strukturabschnitt 9 definiert eine erste Anlageebene und der zweite Strukturabschnitt 11 definiert eine zweite Anlageebene. Beispielsweise verfügt der erste Strukturabschnitt 9 über eine die erste Anlageebene definierende erste Anlagefläche und/oder der zweite Strukturabschnitt 11 über eine die zweite Anlageebene definierende zweite Anlagefläche. Zweckmäßigerweise liegt die Fräsvorrichtung 10 während der Herstellung der Vertiefung 1, insbesondere während der gesamten Herstellung der Vertiefung 1, gleichzeitig mit der ersten Anlageebene und der zweiten Anlageebene an dem Werkstück 2 an. Die erste Anlageebene ist exemplarisch orthogonal zur Tiefenrichtung z ausgerichtet und vorzugsweise in dieser Ausrichtung dauerhaft fixiert, insbesondere derart, dass die Ausrichtung der ersten Anlageebene nicht verändert werden kann.

Der zweite Strukturabschnitt 11 ist relativ zum ersten Strukturabschnitt 9 verschwenkbar gelagert, insbesondere um eine (gedachte) Schwenkachse 15, die vorzugsweise parallel zur x-Achse ausgerichtet ist. Bevorzugt ist der zweite Strukturabschnitt 11 um die Schwenkachse 15 verschwenkbar, die orthogonal zur Drehachse der Abtragungsbewegung des Fräswerkzeugs 17 der Fräsvorrichtung 10 ausgerichtet ist. Die Schwenkachse 15 befindet sich exemplarisch in Querrichtung y zwischen dem ersten Strukturabschnitt 9 und dem zweiten Strukturabschnitt 11. Exemplarisch verfügt die Anlageeinrichtung 6 über ein Schwenklager, das die Schwenkachse 15 definiert.

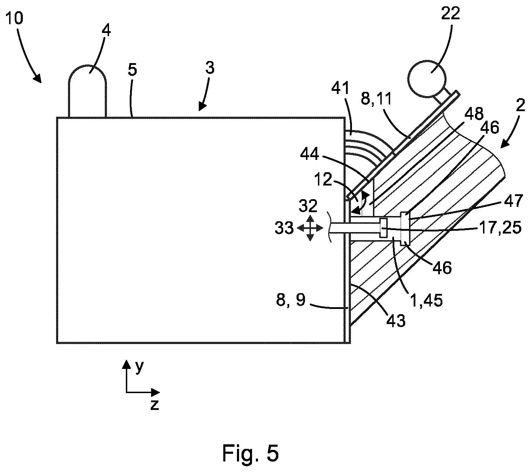

Der zweite Strukturabschnitt 11 ist in eine Mehrzahl an verschiedenen Schwenkpositionen relativ zum ersten Strukturabschnitt 9 fixierbar, um zwischen der ersten Anlageebene und der zweiten Anlageebene einen insbesondere an das Werkstück 2 angepassten festen Winkel 12 (siehe z.B. Fig. 5) einzustellen. Der Winkel 12 liegt insbesondere in einer z-y-Ebene. Durch ein Verschwenken (um die Schwenkachse 15) des zweiten Strukturabschnitts 11 relativ zum ersten Strukturabschnitt 9 kann die zweite Anlageebene relativ zur ersten Anlageebene (und insbesondere relativ zur Tiefenrichtung z) verschwenkt werden. Bevorzugt verfügt die Fräsvorrichtung 10 über eine Fixiereinrichtung, mittels der der zweite Strukturabschnitt 11 in jeder der Mehrzahl an verschiedenen Schwenkpositionen relativ zum ersten Strukturabschnitt 9 fixierbar ist, beispielsweise mittels Kraftschluss und/oder Formschluss. Exemplarisch verfügt die Fixiereinrichtung über wenigstens ein Strukturabschnitt-Führungselement 41, das vorzugsweise als Führungskulisse ausgebildet ist. Exemplarisch ist das wenigstens eine Strukturabschnitt-Führungselement 41 an dem zweiten Strukturabschnitt 11 befestigt und wird mit diesem um die Schwenkachse 15 mitverschwenkt. Vorzugsweise definiert das wenigstens eine Strukturabschnitt-Führungselement 41 die Schwenkachse 15 oder trägt zu der Definition der Schwenkachse 15 bei. Das wenigstens eine Strukturabschnitt-Führungselement 41 kann insbesondere als Teil des Schwenklagers angesehen werden. Die Fixiereinrichtung verfügt vorzugsweise über ein Betätigungselement 42, das exemplarisch als Hebel ausgeführt ist und über dessen Betätigung der zweite Strukturabschnitt 11 in seiner aktuellen Schwenkposition relativ zum ersten Strukturabschnitt 9 fixierbar ist, beispielsweise mittels Kraftschluss und/oder Formschluss, insbesondere dadurch, dass mittels der Betätigungselements 42 wenigstens ein Strukturabschnitt-Führungselement 41 in seiner aktuellen Schwenkposition relativ zum ersten Strukturabschnitt 9 fixiert wird, beispielsweise mittels Kraftschluss und/oder Formschluss.

Der zweite Strukturabschnitt 11 ist insbesondere in eine erste Schwenkposition verschwenkbar, in der die zweite Anlageebene zweckmäßigerweise in der gleichen Ebene liegt wie die erste Anlageebene. In der ersten Schwenkposition ist der Winkel 12 insbesondere 180 Grad. In der ersten Schwenkposition ist der zweite Strukturabschnitt 11 orthogonal zur Tiefenrichtung z ausgerichtet (siehe z.B. Figur 1). Vorzugsweise ist die erste Schwenkposition eine Endposition des zweiten Strukturabschnitts 11. Ausgehend von der ersten Schwenkposition ist der zweite Strukturabschnitt 11 um die Schwenkachse 15 verschwenkbar, um den Winkel 12 zu verkleinern, insbesondere wenigstens bis zu einem Winkel 12 von 90 Grad oder kleiner als 90 Grad. Der zweite Strukturabschnitt 11 ist insbesondere in eine zweite Schwenkposition versetzbar, in der der Winkel 12 weniger als 180 Grad beträgt, beispielsweise 90 Grad oder weniger als 90 Grad.

Exemplarisch sind der erste Strukturabschnitt 9 und/oder der zweite Strukturabschnitt 11 plattenförmig ausgeführt. Die Anlageeinrichtung 6 kann auch als Anlagetisch bezeichnet werden. Der erste Strukturabschnitt 9 umfasst exemplarisch einen ersten Anlageteil 13 und einen zweiten Anlageteil 14, die insbesondere plattenförmig ausgeführt und/oder beanstandet zueinander angeordnet sind. Der erste Anlageteil 13 und der zweite Anlageteil 14 definieren zusammen die erste Anlageebene und liegen zweckmäßigerweise bei der Herstellung der Vertiefung beide gleichzeitig an dem Werkstück 2 an.

Exemplarisch verfügt die Anlageeinrichtung 6 über einen ersten Anlagevorsprung 19 und/oder einen zweiten Anlagevorsprung 21, die exemplarisch an dem ersten Strukturabschnitt 11, insbesondere an dem ersten Anlageteil 13 und dem zweiten Anlageteil 14, angeordnet sind und sich vorzugsweise ausgehend von dem ersten Strukturabschnitt 1 in Tiefenrichtung z erstrecken. Zweckmäßigerweise kann die Fräsvorrichtung 10 bei der Herstellung der Vertiefung 1 mit wenigstens einem der Anlagevorsprünge 19, 21 in eine Richtung orthogonal zur Tiefenrichtung z angelegt werden. Die Anlagevorsprünge 19, 21 sind zweckmäßigerweise relativ zur ersten Anlageebene beweglich gelagert und sind insbesondere in einen eingefahrenen Zustand versetzbar, in dem die Anlagevorsprünge 19, 21 zweckmäßigerweise nicht aus der ersten Anlageebene herausragen, und/oder in einen ausgefahrenen Zustand versetzbar, in dem die Anlagevorsprünge 19, 21 zweckmäßigerweise aus der ersten Anlageebene herausragen.

Bevorzugt weist die Anlagestruktur 8 eine Öffnung 16 auf. Exemplarisch befindet sich die Öffnung 16 in Breitenrichtung x zwischen den beiden Anlageteilen 13, 14. Exemplarisch erstreckt sich das Fräswerkzeug 17 durch die Öffnung 16 hindurch von einem (insbesondere von dem Gehäuse 3 umgebenen) Innenraum 18 nach außerhalb der Fräsvorrichtung 10, insbesondere des Gehäuses 3. Das Fräswerkzeug 17 ist innerhalb der Öffnung 16 mittels einer elektrischen Positioniereinrichtung 18 der Fräsvorrichtung 10 positionierbar, insbesondere entlang wenigstens zweier Positionier-Freiheitsgrade 31, 32, 33. Die Öffnung 16 hat exemplarisch einen länglichen und/oder rechteckförmigen Querschnitt. Die Öffnung 16 ist mit ihrer Öffnungsebene orthogonal zur Tiefenrichtung z ausgerichtet.

Bevorzugt erstreckt sich die die Öffnung 16 über den ersten Strukturabschnitt 9 und den zweiten Strukturabschnitt 11. Die Öffnung 16 ist zweckmäßigerweise in dem ersten Strukturabschnitt 9 vorhanden (exemplarisch zwischen dem ersten Anlageteil 13 und dem zweiten Anlageteil 14) und erstreckt sich von dort aus (exemplarisch in Querrichtung y) in den zweiten Strukturabschnitt 12 hinein. Exemplarisch wird die Öffnung 16 von der (gedachten) Schwenkachse 15 geschnitten. Exemplarisch schneidet die Schwenkachse 15 einen Verfahrbereich des Fräswerkzeugs 17, insbesondere einen x-y-Verfahrbereich oder x-y-z-Verfahrbereich. Der Verfahrbereich wird durch wenigstens zwei oder drei von der Positioniereinrichtung 18 bereitgestellte Positionier-Freiheitsgrade 31, 32, 33 gebildet. Beispielsweise ist der Verfahrbereich eine Ebene, insbesondere eine x-y-Ebene, oder ein Volumen, insbesondere ein x-y-z-Volumen, innerhalb der/dem das Fräswerkzeug 17 mittels der Positioniereinrichtung 18 positionierbar ist.

Exemplarisch erstreckt sich die Öffnung 16 (insbesondere in negativer Querrichtung y) bis zu einer von dem zweiten Strukturabschnitt 11 abgewandten ersten Strukturabschnitt-Kante 23 des ersten Strukturabschnitts 9, und mündet zweckmäßigerweise in negativer Querrichtung y an dieser Kante 23 aus. Gemäß einer alternativen Ausgestaltung erstreckt sich die Öffnung 16 nicht bis zu der ersten Strukturabschnitt-Kante 23, so dass in negativer Querrichtung y unterhalb der Öffnung 16 ein insbesondere stegförmiger Abschnitt von dem ersten Anlageteil 13 zu dem zweiten Anlageteil 14 verläuft.

Exemplarisch umfasst die Fräsvorrichtung 10 einen an dem zweiten Strukturabschnitt 11 angeordneten Anlagestruktur-Handgriff 22, über den zweckmäßigerweise der zweite Strukturabschnitt 11 relativ zum ersten Strukturabschnitt verschwenkbar 9 ist. Exemplarisch ist der Anlagestruktur-Handgriff 22 knauf-förmig ausgeführt. Ferner kann der Anlagestruktur-Handgriff bügelförmig ausgeführt sein. Beispielsweise kann der Benutzer die Fräsvorrichtung 10 mit einer Hand an dem Handgriff 4 halten und gleichzeitig mit der anderen Hand an dem Anlagestruktur-Handgriff 22 halten. Vorzugsweise ist der Anlagestruktur-Handgriff 22 mit seiner Handgriff-Achse parallel zur Breitenrichtung x ausgerichtet. Als Handgriff-Achse soll diejenige (gedachte) Achse des Anlagestruktur-Handgriffs 22 bezeichnet werden, die der Benutzer beim (insbesondere bestimmungsgemäßen) Greifen des Anlagestruktur-Handgriffs 22 umgreift.

Die Fräsvorrichtung 10 umfasst das Fräswerkzeug 17, das insbesondere als Nut-Fräser, vorzugsweise als T-Nutfräser, ausgeführt ist. Das Fräswerkzeug 17 ist insbesondere als Hinterschnitt-Fräser ausgeführt. Als Hinterschnitt-Fräser soll ein Fräser bezeichnet werden, mit dem die Vertiefung 1 mit einem Hinterschnitt hergestellt werden kann, insbesondere einem Hinterschnitt, der entlang einer Richtung parallel zu der Drehachse der Abtragungsbewegung wirkt. Das Fräswerkzeug 17 kann beispielsweise als Hohlkehlfräser ausgeführt sein. Ferner kann das Fräswerkzeug 17 als Bohrer oder Bohrfräser ausgeführt sein, insbesondere dann, wenn die herzustellende Vertiefung 1 keinen Hinterschnitt aufweist. Das Fräswerkzeug 17 verfügt exemplarisch über einen Schaftabschnitt 24 sowie einen an einem Ende des Schaftabschnitts 24 angeordneten Fräskopf 25. Exemplarisch ist der Schaftabschnitt 24 mit seiner Längsachse in Tiefenrichtung z ausgerichtet.

Die Fräsvorrichtung 10 verfügt über eine elektrische Antriebseinrichtung 27, die ausgebildet ist, das Fräswerkzeug 17 in eine rotative Abtragungsbewegung zu versetzen. Die Drehachse der rotativen Abtragungsbewegung ist zweckmäßigerweise in Tiefenrichtung z ausgerichtet. Die elektrische Antriebseinrichtung 27 umfasst beispielsweise einen Elektromotor 28, um das Fräswerkzeug 17 in die rotative Abtragungsbewegung zu versetzen. Zweckmäßigerweise verfügt die Antriebseinrichtung 27 über eine Werkzeugschnittstelle 29 an die das Fräswerkzeug 17 angebracht ist. Beispielsweise verfügt die Werkzeugschnittstelle 29 über ein Außengewinde und das Fräswerkzeug 17 verfügt über ein Innengewinde, mit dem das Fräswerkzeug 17 auf das Außengewinde geschraubt ist. Das Außengewinde ist vorzugsweise an einer Spindel 49 der Antriebseinrichtung 27 angeordnet.

Die Fräsvorrichtung 10 verfügt über die elektrische Positioniereinrichtung 26, die ausgebildet ist, das Fräswerkzeug 17 entlang wenigstens zweier insbesondere linearer Positionier-Freiheitsgrade 31, 32, 33 relativ zu der Anlagestruktur 8 zu verfahren. Sofern von Positionier-Freiheitsgraden die Rede ist, so sollen damit stets Freiheitsgrade der elektrischen Positioniereinrichtung 26 gemeint sein. Insbesondere sind die Positionier-Freiheitsgrads 31, 32, 33 diejenigen Freiheitgrade, entlang denen eine von einer elektronischen Steuereinheit 37 der Fräsvorrichtung 10 instruierte Position mittels der elektrischen Positioniereinrichtung 26 anfahrbar ist. Insbesondere ist entlang der Positionier-Freiheitsgrade 31, 32, 33 mittels der Positioniereinrichtung 26 eine Positionierung gemäß einer von der Steuereinheit 37 vorgegebenen (insbesondere beliebigen) Soll-Position möglich. Die Soll-Position definiert zweckmäßigerweise für jeden Positionier-Freiheitsgrad 31, 32, 33 einen jeweiligen Soll-Positionswert.

Bevorzugt ist die Positioniereinrichtung 26 ausgebildet, das Fräswerkzeug entlang dreier insbesondere linearer Positionier-Freiheitsgrade 31, 32, 33 relativ zu der Anlagestruktur 8 zu verfahren, wobei die drei Positionier-Freiheitsgrade 31, 32, 33 vorzugsweise orthogonal zueinander ausgerichtet sind. Bevorzugt verläuft einer der Positionier-Freiheitsgrade, insbesondere ein erster Positionier-Freiheitsgrad 31, orthogonal zur Drehachse der Abtragungsbewegung und/oder parallel zu der ersten Anlageebene. Insbesondere verläuft der erste Positionier-Freiheitsgrad 31 in Breitenrichtung x. Bevorzugt verläuft einer der Positionier-Freiheitsgrade, insbesondere ein zweiter Positionier-Freiheitsgrad 32 in Querrichtung y, also insbesondere orthogonal zum ersten Positionier-Freiheitsgrad 31 und/oder zur Drehachse der Abtragungsbewegung. Bevorzugt verläuft einer der Positionier-Freiheitsgrade, insbesondere ein dritter Positionier-Freiheitsgrad 33, in Achsrichtung der Drehachse der Abtragungsbewegung und/oder orthogonal zu der ersten Anlageebene. Insbesondere verläuft der dritte Positionier-Freiheitsgrad 33 in Tiefenrichtung z.

Exemplarisch verfügt die Positioniereinrichtung 26 zur Bereitstellung der Positionier-Freiheitsgrade 31, 32, 33 über drei orthogonal zueinander ausgerichtete Linearachsen. Vorzugsweise verfügt die Positioniereinrichtung 26 über drei Linearantriebe 34A, 34B, 34C, die insbesondere dazu dienen die drei Linearachsen bereitzustellen. Jeder der Linearantriebe 34A, 34B, 34C verfügt zweckmäßigerweise über einen jeweiligen Elektromotor. Die drei Linearantriebe 34A, 34B, 34C umfassen einen ersten Linearantrieb 34A, einen zweiten Linearantrieb 34B und einen dritten Linearantrieb 34C.

Der erste Linearantrieb 34A verfügt über ein erstes Führungselement 35A, insbesondere eine erste Führungsschiene, das mit seiner Längsachse exemplarisch in Breitenrichtung x ausgerichtet ist. Der erste Linearantrieb 34A verfügt über ein an dem ersten Führungselement 35A gelagertes erstes Antriebselement 36A, insbesondere einen ersten Schlitten, das elektrisch entlang des ersten Positionier-Freiheitsgrads 31 relativ zum ersten Führungselement 35A durch den ersten Linearantrieb 34A elektrisch antreibbar ist. Bevorzugt umgreift der erste Schlitten die erste Führungsschiene und wird insbesondere formschlüssig an dieser gehalten, so dass der erste Schlitten zweckmäßigerweise nur in Richtung des ersten Positionier-Freiheitsgrads 31 verfahrbar ist. Beispielsweise weist die erste Führungsschiene ein X-Profil auf, das von dem ersten Schlitten an drei Seiten umgriffen wird.

Der zweite Linearantrieb 34B verfügt über ein zweites Führungselement 35B, insbesondere eine zweite Führungsschiene, das mit seiner Längsachse exemplarisch in Querrichtung y ausgerichtet ist. Der zweite Linearantrieb 34B verfügt über ein an dem zweiten Führungselement 35B gelagertes zweites Antriebselement 36B, insbesondere einen zweiten Schlitten, das elektrisch entlang des zweiten Positionier-Freiheitsgrads 32 relativ zum zweiten Führungselement 35B durch den zweiten Linearantrieb 34B elektrisch antreibbar ist. Bevorzugt umgreift der zweite Schlitten die zweite Führungsschiene und wird insbesondere formschlüssig an dieser gehalten, so dass der zweite Schlitten zweckmäßigerweise nur in Richtung des zweiten Positionier-Freiheitsgrads 32 verfahrbar ist. Beispielsweise weist die zweite Führungsschiene ein X-Profil auf, das von dem zweiten Schlitten an drei Seiten umgriffen wird.

Der dritte Linearantrieb 34C verfügt über ein drittes Führungselement 35C, insbesondere eine dritte Führungsschiene, das mit seiner Längsachse exemplarisch in Tiefenrichtung z ausgerichtet ist. Der dritte Linearantrieb 34C verfügt über ein an dem dritten Führungselement 35C gelagertes drittes Antriebselement 36C, insbesondere einen dritten Schlitten, das elektrisch entlang des dritten Positionier-Freiheitsgrads 33 relativ zum dritten Führungselement 35C durch den dritten Linearantrieb elektrisch antreibbar ist. Bevorzugt umgreift der dritte Schlitten die dritte Führungsschiene und wird insbesondere formschlüssig an dieser gehalten, so dass der dritte Schlitten zweckmäßigerweise nur in Richtung des dritten Positionier-Freiheitsgrads 33 verfahrbar ist. Beispielsweise weist die dritte Führungsschiene ein X-Profil auf, das von dem dritten Schlitten an drei Seiten umgriffen wird.

Exemplarisch ist die Antriebseinrichtung 27 an dem dritten Linearantrieb 34C, insbesondere dem dritten Antriebselement 36C, befestigt, so dass die Antriebseinrichtung 27 (und dadurch das Fräswerkzeug 17) durch den dritten Linearantrieb 34C entlang des dritten Positionier-Freiheitsgrads 33 positionierbar ist. Exemplarisch ist der dritte Linearantrieb 34C (insbesondere mit dem dritten Führungselement 35C) an dem zweiten Linearantrieb 34B, insbesondere dem zweiten Antriebselement 36B, befestigt, so dass der dritte Linearantrieb (und dadurch die Antriebseinrichtung 27 mit dem Fräswerkzeug 17) durch den zweiten Linearantrieb 34B entlang des zweiten Positionier-Freiheitsgrads 33 positionierbar ist.

Exemplarisch ist der zweite Linearantrieb 34B (insbesondere mit dem ersten Führungselement 35A) an dem ersten Linearantrieb 34A, insbesondere dem ersten Antriebselement 36A, befestigt, so dass der zweite Linearantrieb 34B (und dadurch der dritte Linearantrieb 34C sowie die Antriebseinrichtung 27 mit dem Fräswerkzeug 17) durch den ersten Linearantrieb 34A entlang des ersten Positionier-Freiheitsgrads 31 positionierbar ist.

Exemplarisch ist der erste Linearantrieb 34A, insbesondere das erste Führungselement 35A, innen auf der Anlageseite 7, insbesondere an einer der Anlageseite 7 zugeordneten Wand 51, der Fräsvorrichtung 10 angeordnet. Exemplarisch ist der erste Linearantrieb 34A, insbesondere das erste Führungselement 35A, weiter in (positiver) Querrichtung y angeordnet als die Öffnung 16. In anderen Worten ist der erste Linearantrieb 34A, insbesondere das erste Führungselement 35A, exemplarisch in Querrichtung y, zwischen der Öffnung 16 und der ersten Seite 5 angeordnet. In einer Ausrichtung der Fräsvorrichtung 10, in der die Querrichtung y vertikal ausgerichtet ist und nach oben zeigt, ist der erste Linearantrieb 34A, insbesondere das erste Führungselement 35A, oberhalb der Öffnung 16 angeordnet. Die Fräsvorrichtung 10, insbesondere das Gehäuse 3, umfasst die der Anlageseite 7 zugeordnete Wand 51, die exemplarisch orthogonal zur Tiefenrichtung z ausgerichtet ist. Außen an der Wand 51 (also exemplarisch an der in positiver Tiefenrichtung z ausgerichteten Seite) ist die Anlageeinrichtung 6 angeordnet und innen an der Wand 51 (exemplarisch an der in negativer Tiefenrichtung z ausgerichteten Seite) ist der erste Linearantrieb 34A angeordnet.

Bevorzugt beträgt ein maximaler Verfahrweg für die Positionierung des Fräswerkzeugs 17 entlang des in der Breitenrichtung x verlaufenden Positionier-Freiheitsgrads 31 wenigstes 1,3 cm und/oder ein maximaler Verfahrweg für die Positionierung des Fräswerkzeugs entlang des in der Querrichtung y verlaufenden Positionier-Freiheitsgrads 32 beträgt wenigstes 0,4 cm und/oder ein maximaler Verfahrweg für die Positionierung des Fräswerkzeugs entlang des in der Tiefenrichtung z verlaufenden Positionier-Freiheitsgrads beträgt wenigstens 1,1 cm.

Bevorzugt beträgt der maximale Verfahrweg des Fräswerkzeugs 17 entlang des zweiten Positionier-Freiheitsgrads 32 wenigstens 20%, wenigstens 50% oder wenigstens 70% des maximalen Verfahrwegs des Fräswerkzeugs 17 entlang des ersten Positionier-Freiheitsgrads 31.

Gemäß einer möglichen Ausgestaltung beträgt der maximale Verfahrweg des Fräswerkzeugs 17 entlang des ersten Positionier-Freiheitsgrads 31 wenigstens 6 cm und/oder der maximale Verfahrweg des Fräswerkzeugs 17 entlang des zweiten Positionier-Freiheitsgrads 32 wenigstens 5 cm und/oder der maximale Verfahrweg des Fräswerkzeugs 17 entlang des dritten Positionier-Freiheitsgrads 32 wenigstens 4 cm.

Gemäß einer weiteren möglichen Ausgestaltung beträgt der maximale Verfahrweg des Fräswerkzeugs 17 entlang des ersten Positionier-Freiheitsgrads 31 7,6 cm und/oder der maximale Verfahrweg des Fräswerkzeugs 17 entlang des zweiten Positionier-Freiheitsgrads 32 2,9 cm und/oder der maximale Verfahrweg des Fräswerkzeugs 17 entlang des dritten Positionier-Freiheitsgrads 32 4,5 cm.

Die Fräsvorrichtung 10 umfasst die elektronische Steuereinheit 37, die beispielsweise einen Mikroprozessor, insbesondere einen Microcontroller, umfasst und vorzugsweise als Microcontroller ausgebildet ist. Die Steuereinheit 37 ist ausgebildet, die elektrische Positioniereinrichtung 26 gemäß einer Bewegungsinformation anzusteuern, so dass die elektrische Positioniereinrichtung 26 das Fräswerkzeug 17 in eine durch die Bewegungsinformation definierte Bewegungsabfolge entlang der wenigstens zwei Positionier-Freiheitsgrade 31, 32, 33 versetzt, während das Fräswerkzeug 17 die rotative Abtragungsbewegung durchführt, um die Vertiefung 1 mit einer vorgegebenen Vertiefung-Geometrie herzustellen. Mit dem Begriff "Vertiefung-Geometrie" ist die Geometrie der herzustellenden Vertiefung 1, gemeint, also insbesondere die Abmessungen und/oder Form der herzustellenden Vertiefung, vorzugsweise in jeder der Positionier-Freiheitsgrade 31, 32, 33. Vorzugsweise führt das Fräswerkzeug 17 die rotative Abtragungsbewegung während wenigstens einem Teil der Bewegungsabfolge durch, optional während der gesamten Bewegungsabfolge. Insbesondere führt das Fräswerkzeug 17 die rotative Abtragungsbewegung (bei der Bewegungsabfolge) wenigstens während einer Bewegung entlang des ersten Positionier-Freiheitsgrads 31 und/oder während einer Bewegung entlang des zweiten Positionier-Freiheitsgrads 32 und/oder während einer Bewegung entlang des dritten Positionier-Freiheitsgrads 33 durch.

Die Durchführung der durch die Bewegungsinformation definierten Bewegungsabfolge (unter Durchführung der rotativen Abtragungsbewegung) soll auch als Herstellprozedur bezeichnet werden.

Die Bewegungsinformation ist beispielsweise in der elektronischen Steuereinheit 37 gespeichert, beispielsweise als eine Datei, und/oder wird von der elektronischen Steuereinheit 37 empfangen und/oder wird von der elektronischen Steuereinheit 37 erzeugt. Beispielsweise definiert die Bewegungsinformation eine Mehrzahl von sukzessiven Soll-Positionen des Fräswerkzeugs 17, insbesondere jeweils in Bezug auf die wenigstens zwei Positionier-Freiheitsgrade 31, 32, 33. Vorzugsweise definiert die Bewegungsinformation für das Fräswerkzeug eine Vorschubgeschwindigkeit, Vorschubrichtung und/oder Fräserdrehzahl, insbesondere für jede Bewegung des Fräswerkzeugs zwischen zwei sukzessiven Soll-Positionen.

Bevorzugt definiert die Bewegungsinformation die Bewegungsabfolge entlang der drei Positionier-Freiheitsgrade 31, 32, 33 und die Bewegungsabfolge gibt die Vertiefung-Geometrie in Bezug auf die drei Positionier-Freiheitsgrade vor. Beispielsweise definiert die Bewegungsinformation eine Mehrzahl von sukzessiven Soll-Positionen des Fräswerkzeugs 17, insbesondere jeweils in Bezug auf die drei Positionier-Freiheitsgrade 31, 32, 33.

Bevorzugt verfügt die elektronische Steuereinheit 37 über mehrere verschiedene Bewegungsinformationen. Jede Bewegungsinformation ist einer jeweiligen Vertiefung-Geometrie zugeordnet. Vorzugsweise unterscheiden sich die Vertiefung-Geometrien voneinander. Die Steuereinheit 37 ist ausgebildet, die Positioniereinrichtung 26 gemäß einer der Bewegungsinformationen anzusteuern um zu bewirken, dass die Vertiefung 1 mit der dieser Bewegungsinformation zugeordneten Vertiefung-Geometrie hergestellt wird. Mit der Formulierung, dass einer Bewegungsinformation eine Vertiefung-Geometrie zugeordnet ist, soll gemeint sein, dass durch eine Durchführung der Herstellprozedur mit dieser Bewegungsinformation eine Vertiefung 1 mit der zugeordneten Vertiefung-Geometrie herstellbar ist.

Optional ist die Steuereinheit 37 ausgebildet, die für die Herstellung der Vertiefung 1 zu verwendende Bewegungsinformation unter den vorhandenen Bewegungsinformationen auszuwählen, beispielsweise gemäß einer Benutzereingabe, und die Positioniereinrichtung 26 gemäß der ausgewählten Bewegungsinformationen anzusteuern um zu bewirken, dass die Vertiefung 1 mit der der ausgewählten Bewegungsinformation zugeordneten Vertiefung-Geometrie hergestellt wird.

Bevorzugt verfügt die Fräsvorrichtung 10 über eine Bedieneinrichtung 52, die exemplarisch außen an dem Gehäuse 3 angeordnet ist. Die Bedieneinrichtung 52 umfasst wenigstens ein Bedienelement 53, beispielsweise eine Taste, zur Bedienung der Fräsvorrichtung 10. Beispielsweise dient das Bedienelement 53 dazu, die Herstellprozedur zur Herstellung der Vertiefung 1 zu starten.

Optional ist über die Bedieneinrichtung 52, die Benutzereingabe zur Auswahl der zu verwendenden Bewegungsinformation durchführbar.

Optional verfügt die Fräsvorrichtung 10 über einen Absaugkanal, über den bei der Herstellung der Vertiefung 1 entstehende Partikel, insbesondere Späne, abgesaugt werden können.

Unter Bezugnahme auf die Figur 5 soll im Folgenden näher auf einen Zustand eingegangen werden, in dem die Fräsvorrichtung 10 an dem Werkstück 2 anliegt und mit dem Fräswerkzeug 17 die Vertiefung in dem Werkstück 2 herstellt.

Die Fräsvorrichtung 10 liegt mit dem ersten Strukturabschnitt 9, insbesondere der ersten Anlageebene, an einer ersten Werkstückfläche 43 an, insbesondere flächig. Die erste Werkstückfläche ist exemplarisch orthogonal zur Tiefenrichtung z ausgerichtet. Exemplarisch ist die erste Werkstückfläche 43 eine ebene Fläche und bildet insbesondere eine ebene erste Seite des Werkstücks 2. Die erste Werkstückfläche 43, insbesondere die erste Seite des Werkstücks 2, ist exemplarisch in Querrichtung y kürzer als die Fräsvorrichtung 10.

Die Fräsvorrichtung 10 liegt mit dem zweiten Strukturabschnitt 11, insbesondere der zweiten Anlageebene, an einer zweiten Werkstückfläche 44 an, insbesondere flächig. Exemplarisch ist die zweite Werkstückfläche 44 eine ebene Fläche und bildet insbesondere eine ebene zweite Seite des Werkstücks 2. Die zweite Werkstückfläche 44 ist relativ zur ersten Werkstückfläche 43 angewinkelt und insbesondere nicht orthogonal zur Tiefenrichtung z ausgerichtet. Die zweite Werkstückfläche 44 ist nicht parallel relativ zur ersten Werkstückfläche 43 ausgerichtet.

Der zweite Strukturabschnitt 11 ist in einer Schwenkposition fixiert, in der eine gleichzeitige (insbesondere flächige) Anlage der ersten Anlageebene an der ersten Werkstückfläche 43 und der zweiten Anlageebene an der zweiten Werkstückfläche 44 gegeben ist. Zwischen den Anlageebenen 11, 12 ist durch die Schwenkposition des zweiten Strukturabschnitts 11 der Winkel 12 eingestellt, vorzugsweise ein Winkel kleiner als 180 Grad und/oder größer gleich 90 Grad.

Die herzustellende Vertiefung 1 mündet exemplarisch an der ersten Werkstückfläche 43 aus. Bevorzugt mündet die herzustellende Vertiefung 1 an der ersten Werkstückfläche 43 und an der zweiten Werkstückfläche 44 aus. Bei der Herstellung der Vertiefung positioniert die Positioniereinrichtung 26 das Fräswerkzeug 17 in Querrichtung y so weit, bis das Fräswerkzeug 17, insbesondere der Fräskopf 25, sich in oder an dem in dem zweiten Strukturabschnitt 11 vorhandenen Teil der Öffnung 16 befindet, insbesondere während das Fräswerkzeug 17 die Abtragungsbewegung durchführt. Auf diese Weise kann (insbesondere ohne Umpositionierung der Fräsvorrichtung 10) die an der zweiten Werkstückfläche 44 ausmündende Vertiefung 1 hergestellt werden.

Optional kann das Fräswerkzeug 17 zur Herstellung der Vertiefung 1 von oben durch die zweite Werkstückfläche 44 eintauchen. Insbesondere zu diesem Zweck kann die Fräsvorrichtung 10 ausgebildet sein, zunächst das Fräswerkzeug 17 mittels der Positioniereinrichtung 26 in Querrichtung y unter Durchführung einer Positionierbewegung so weit zu verfahren, bis das Fräswerkzeug 17, insbesondere der Fräskopf 25, sich in oder an dem in dem zweiten Strukturabschnitt 11 vorhandenen Teil der Öffnung 16 befindet und vorzugsweise weiter in (positiver) Querrichtung y positioniert ist als die zweite Werkstückfläche 44 (oder als ein unterer Abschnitt der zweiten Werkstückfläche 44). Zweckmäßigerweise führt das Fräswerkzeug 17 während dieser Positionierbewegung die Abtragungsbewegung nicht durch, rotiert also zweckmäßigerweise nicht. Das Fräswerkzeug 17, insbesondere der Fräskopf 25, befindet sich während dieser Positionierbewegung zweckmäßigerweise außerhalb, insbesondere vor, der ersten Werkstückfläche 43. Vorzugsweise ist die Fräsvorrichtung 10 ausgebildet, nach Durchführung der Positionierbewegung (und/oder einer weiteren Positionierbewegung des Fräswerkzeugs 17 in positive Tiefenrichtung z) das Fräswerkzeug 17 in die Abtragungsbewegung zu versetzen, und, während das Fräswerkzeug 17 die Abtragungsbewegung durchführt, das Fräswerkzeug 17 zur Herstellung der Vertiefung 1 in die zweite Werkstückfläche 44 hineinzubewegen, insbesondere durch ein Verfahren des Fräswerkzeugs 17 in (negative) Querrichtung y und/oder (positive) Tiefenrichtung z mittels der Positioniereinrichtung 26.

Die herzustellende Vertiefung 1 umfasst vorzugsweise ein Verbinderloch 45. Als Verbinderloch 45 soll ein Loch zum wenigstens teilweisen Einsetzen eines Verbinders bezeichnet werden. Ein Verbinder ist ein Element zum Verbinden zweier Werkstücke. Ein Beispiel für einen Verbinder ist ein Dübel, insbesondere ein Holzdübel.

Das Verbinderloch 45 ist beispielsweise eine Koppelnut und weist vorzugsweise einen entlang einer Nuttiefenrichtung wirkenden ersten Hinterschnitt 46 auf. Die Nuttiefenrichtung ist exemplarisch die (positive) Tiefenrichtung z. Mit der Formulierung, dass der Hinterschnitt 46 entlang der ersten Nuttiefenrichtung wirkt, ist insbesondere gemeint, dass der Hinterschnitt 46 dazu dient, ein Herausziehen eines in das Verbinderloch eingesetzten und mit dem Hinterschnitt 46 in Eingriff stehenden Verbinders entlang der Nuttiefenrichtung (insbesondere in negativer Tiefenrichtung z) zu verhindern. Der Hinterschnitt 46 dient insbesondere zur Aufnahme eines Eingriffvorsprungs 57 eines in das Verbinderloch einzusetzenden Verbinders. Der Hinterschnitt 46 ist zweckmäßigerweise eine Aussparung, insbesondere eine längliche Aussparung, beispielsweise eine Nut, wobei die Längsachse der länglichen Aussparung vorzugsweise parallel zur Breitenrichtung x ausgerichtet ist. Der Hinterschnitt 46 ist vorzugsweise im Bereich eines Nutgrundes 47 der Koppelnut angeordnet. Der Nutgrund 47 ist beispielsweise orthogonal zur Tiefenrichtung y und/oder parallel zur Querrichtung y ausgerichtet. Das Verbinderloch 45 mündet zweckmäßigerweise an der ersten Werkstückfläche 43 aus, insbesondere ausschließlich an der ersten Werkstückfläche 43.

Exemplarisch umfasst die herzustellende Vertiefung 1 ferner ein Zugangsloch 48 zu dem Verbinderloch 45. Das Zugangsloch 48 verläuft exemplarisch ausgehend von dem Verbinderloch 45 in Querrichtung y bis zur zweiten Werkstückfläche 44, an der das Zugangsloch 48 ausmündet. Exemplarisch mündet das Zugangsloch 48 an der ersten Werkstückfläche 43 und an der zweiten Werkstückfläche 44 aus. Das Zugangsloch 48 dient insbesondere dazu, um (insbesondere über die zweite Werkstückfläche 44) einen Zugang für das Werkzeug 56 zu einem in das Verbinderloch 45 eingesetzten Verbinder bereitzustellen, so dass beispielsweise der Betätigungsabschnitt 55 des Verbinders mit dem Werkzeug 56 betätigt werden kann, während der Verbinder in das Verbinderloch 45 eingesetzt ist.

Bevorzugt wird die Geometrie des Verbinderlochs 45 und/oder des Zugangslochs 48 durch die mittels der Bewegungsinformation definierte Bewegungsabfolge festgelegt, insbesondere in Bezug auf die drei Positionier-Freiheitsgrade 31, 32, 33. Die Bewegungsinformation legt insbesondere die Erstreckung des Verbinderlochs 45 und/oder des Zugangslochs 48 in Breitenrichtung x, Querrichtung y und/oder Tiefenrichtung z fest.

Die der Bewegungsinformation zugeordnete Vertiefung-Geometrie umfasst zweckmäßigerweise eine Verbinderloch-Geometrie und/oder eine Zugangsloch-Geometrie. Der Bewegungsinformation ist also zweckmäßigerweise eine Verbinderloch-Geometrie des Verbinderlochs 45 und/oder eine Zugangsloch-Geometrie des Zugangslochs 48 zugeordnet. Mit der Formulierung, dass einer Bewegungsinformation eine Verbinderloch-Geometrie oder eine Zugangsloch-Geometrie zugeordnet ist, soll gemeint sein, dass durch eine Durchführung der Herstellprozedur mit dieser Bewegungsinformation die zugeordnete Verbinderloch-Geometrie oder die zugeordnete Zugangsloch-Geometrie herstellbar ist.

Bevorzugt ist mittels der Fräsvorrichtung 10 wahlweise eine Vertiefung ohne Hinterschnitt (z.B. die nachstehend erläuterte Dübel-Vertiefung) und/oder eine Vertiefung mit Hinterschnitt (z.B. die nachstehend erläuterte Dreh-Verbinder-Vertiefung 1A, 1C und/oder Kinematik-Verbinder-Vertiefung 1E, 1F) und/oder eine Vertiefung mit Zugangsloch (z.B. die nachstehend erläuterte Dreh-Verbinder-Vertiefung 1A und/oder Kinematik-Verbinder-Vertiefung 1E) und/oder eine Vertiefung ohne Zugangsloch (z.B. die nachstehend erläuterte Dreh-Verbinder-Vertiefung 1C und/oder Kinematik-Verbinder-Vertiefung 1F) und/oder eine Vertiefung mit kreisscheibenförmigem Hauptabschnitt und Hinterschnitt (z.B. die nachstehend erläuterte Dreh-Verbinder-Vertiefung 1A, 1C) herstellbar.

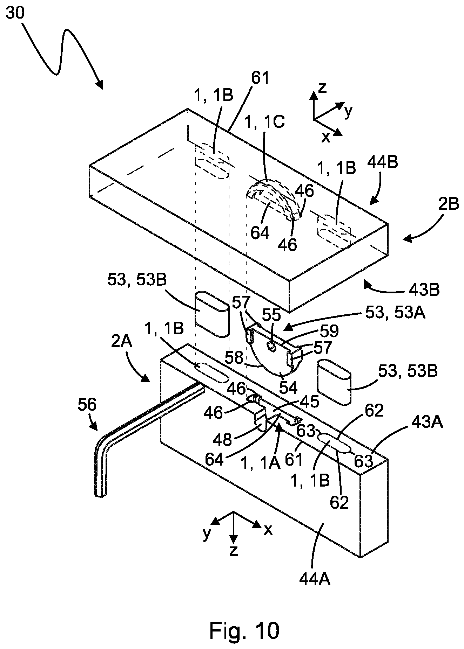

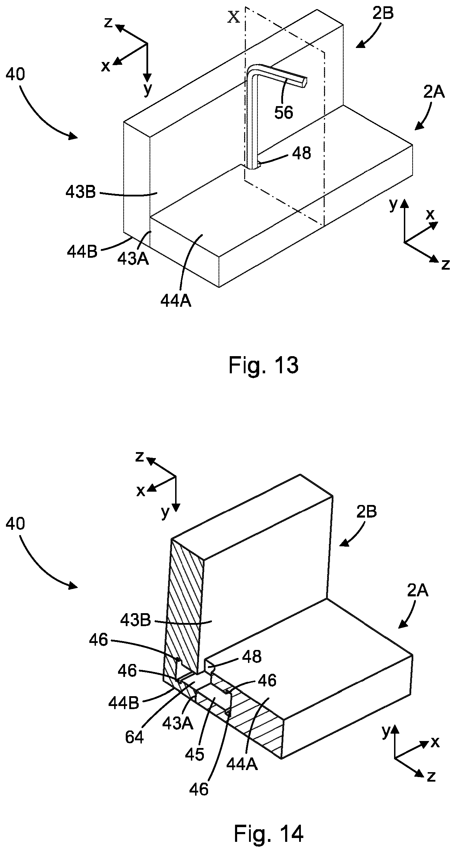

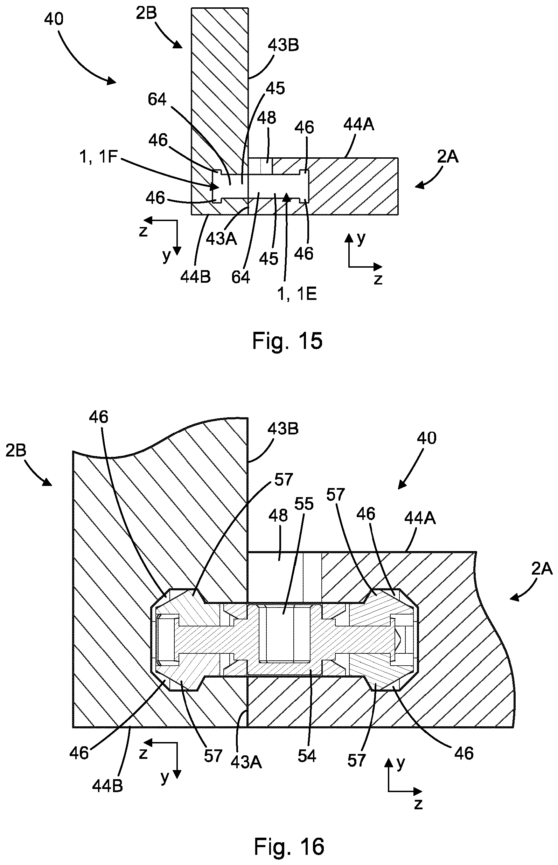

Im Folgenden soll unter Bezugnahme auf die Figuren 10 bis 16 auf verschiedene Vertiefungen 1 eingegangen werden, die vorzugsweise mit der Fräsvorrichtung 10 herstellbar sind (insbesondere wie vorstehend erläutert). In den Figuren 10 bis 16 sind jeweils zwei Werkstücke 2A, 2B gezeigt, die jeweils wenigstens eine Vertiefung 1 aufweisen. In den Figuren 10 bis 16 ist zu jedem Werkstück 2A, 2B ein jeweiliges Koordinatensystem eingezeichnet, das einer möglichen (oder notwendigen) Ausrichtung der Fräsvorrichtung 10 bei der Herstellung einer oder mehrerer Vertiefungen 1 des jeweils zugeordneten Werkstücks 2 entspricht. Zweckmäßigerweise liegt die Fräsvorrichtung 10 während der (insbesondere gesamten) Herstellung jeder der nachstehend erläuterten Vertiefungen 1 jeweils gleichzeitig mit beiden Strukturabschnitten 9, 11 stationär an dem jeweiligen Werkstück 2A, 2B, in dem die Vertiefung 1 hergestellt wird, an, insbesondere gleichzeitig mit dem ersten Strukturabschnitt 9 an der ersten Werkstückfläche 43A und mit dem zweiten Strukturabschnitt 11 an der zweiten Werkstückfläche 44A (oder gleichzeitig mit dem ersten Strukturabschnitt 9 an der ersten Werkstückfläche 43B und mit dem zweiten Strukturabschnitt 11 an der zweiten Werkstückfläche 44B).

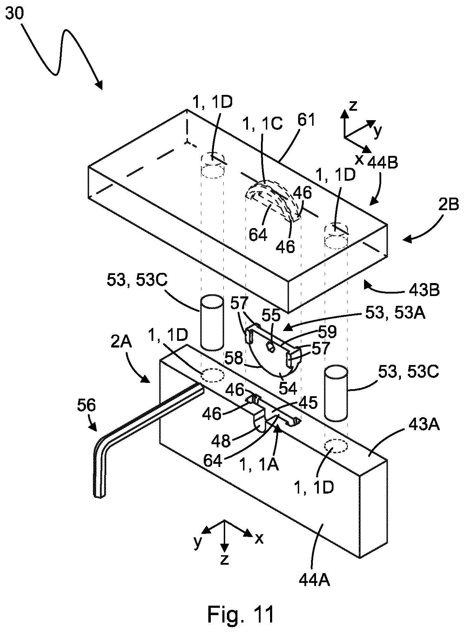

Die Figur 10 zeigt eine Werkstückanordnung 30, die ein erstes Werkstück 2A und ein zweites Werkstück 2B umfasst, sowie einen Verbinder 53, der exemplarisch als Dreh-Verbinder 53A ausgeführt ist. Optional verfügt die Werkstückanordnung 30 ferner über zwei weitere Verbinder 53, die als Dübel, exemplarisch als Flachdübel 53B, ausgeführt sind. Alternativ können die weiteren Verbinder 53 auch als Runddübel 53C ausgeführt sein, wie dies in der Figur 11 gezeigt ist.

Der Dreh-Verbinder 53A verfügt über einen Verbinderkörper 54, der exemplarisch die Form eines Kreisscheibenabschnitts hat und vorzugsweise zwei kreisabschnittsförmige Hauptseiten aufweist. Die Hauptseiten sind parallel zueinander angeordnet. Die Außenkontur jeder der Hauptseiten verfügt über einen Kreisbogenabschnitt 58 und einen die beiden Enden des Kreisbogenabschnitts 58 verbindenden Kreissehnenabschnitt 59. Der Verbinderkörper 54 verfügt über einen Betätigungsabschnitt 55, der exemplarisch als insbesondere sechskantige Aussparung ausgeführt ist und zweckmäßigerweise konzentrisch zu dem Kreisbogenabschnitt 58 in wenigstens einer der Hauptseiten vorhanden ist. In den Betätigungsabschnitt 55 kann ein exemplarisch als Innensechskant ausgeführtes Werkzeug 56 eingesetzt werden. Der Dreh-Verbinder 53A verfügt über Eingriffsvorsprünge 57, die senkrecht von jeder Hauptseite von dem Verbinderkörper 54 abragen und exemplarisch an den Enden, insbesondere ausschließlich an den Enden, des jeweiligen Kreisbogenabschnitts 58 angeordnet sind. Exemplarisch sind vier Eingriffsvorsprünge 57 vorhanden, wobei jeder Eingriffsvorsprung 57 an einem jeweiligen Ende eines Kreisbogenabschnitts 58 angeordnet ist.

Die exemplarisch als Flachdübel 53B ausgeführten Dübel haben jeweils die Form eines Zylinders, exemplarisch mit einer Grundfläche, deren Außenkontur zwei parallel verlaufende Geraden-Abschnitte und zwei die Geraden-Abschnitte verbindende, abgerundete, insbesondere kreisbogenförmige, Endabschnitte aufweist. Die Runddübel 53C haben jeweils die Form eines Kreiszylinders.

Das erste Werkstück 2A verfügt über eine erste Werkstückfläche 43A, in der exemplarisch drei Vertiefungen 1 vorhanden sind, und zwar eine Verbinder-Vertiefung, insbesondere eine Dreh-Verbinder-Vertiefung 1A, zur teilweisen Aufnahme eines Verbinders, insbesondere des Dreh-Verbinders 53A, sowie optional zwei Dübel-Vertiefungen, insbesondere Flachdübel-Vertiefungen 1B, zur teilweisen Aufnahme eines jeweiligen Dübels, insbesondere Flachdübels 53B. Alternativ können die Dübel-Vertiefungen als Runddübel-Vertiefungen 1D ausgebildet sein (vgl. Fig. 11). Die Verbinder-Vertiefung verfügt exemplarisch über das Verbinderloch 45 und das Zugangsloch 48. Das erste Werkstück 2A verfügt ferner über eine zweite Werkstückfläche 44A, die exemplarisch orthogonal zur ersten Werkstückfläche 43A ausgerichtet ist und insbesondere über eine gemeinsame Kante 61 mit der ersten Werkstückfläche 43A verbunden ist.

Das zweite Werkstück 2B verfügt über eine erste Werkstückfläche 43B, in der exemplarisch drei Vertiefungen 1 vorhanden sind, und zwar eine Verbinder-Vertiefung, insbesondere eine Dreh-Verbinder-Vertiefung 1C, zur teilweisen Aufnahme eines Verbinders, insbesondere des Dreh-Verbinders 53A, sowie optional zwei Dübel-Vertiefungen, insbesondere Flachdübel-Vertiefungen 1B oder Runddübel-Vertiefungen 1D, zur teilweisen Aufnahme eines jeweiligen Dübels, insbesondere Flachdübels 53B. Alternativ können die Dübel-Vertiefungen als Runddübel-Vertiefungen 1D ausgebildet sein (vgl. Fig. 11). Die Verbinder-Vertiefung verfügt exemplarisch über das Verbinderloch 45 und insbesondere über kein Zugangsloch 48. Das zweite Werkstück 2B verfügt ferner über eine zweite Werkstückfläche 44B, die exemplarisch orthogonal zur ersten Werkstückfläche 43B ausgerichtet ist und insbesondere über eine gemeinsame Kante 61 mit der ersten Werkstückfläche 43B verbunden ist.

Die Werkstückanordnung 30 ist in einen zusammengesetzten Zustand versetzbar, in dem das erste Werkstück 2A mit dem zweiten Werkstück 2B über den Verbinder 53, insbesondere den Dreh-Verbinder 53A und/oder einen oder mehrere Flachdübel 53B (oder Runddübel 53C), verbunden ist, insbesondere derart, dass das zweite Werkstück 2B relativ zum ersten Werkstück 2A fixiert ist, insbesondere in sämtliche Raumrichtungen, und/oder dass das zweite Werkstück 2B mit seiner ersten Werkstückfläche 43B an der ersten Werkstückfläche 43A des ersten Werkstücks 2A anliegt, insbesondere flächig. In dem zusammengesetzten Zustand ist der Verbinder 53, insbesondere der Dreh-Verbinder 53A, in einer Vertiefung 1, exemplarisch der Dreh-Verbinder-Vertiefung 1A, des ersten Werkstücks 2A und in einer Vertiefung 1, exemplarisch der Dreh-Verbinder-Vertiefung 1C, des zweiten Werkstücks 2B eingesetzt. Ferner sind die weiteren Verbinder 53, exemplarisch die Flachdübel 53B (oder die Runddübel 53C), in die Flachdübel-Vertiefungen 1B (oder die Flachdübel-Vertiefungen 1D) beider Werkstücke 2A, 2B eingesetzt. Exemplarisch wird zur Befestigung des zweiten Werkstücks 2B an das erste Werkstück 1A der gesamte Dreh-Verbinder 53A in einem zumindest in die Dreh-Verbinder-Vertiefung 1A des ersten Werkstücks 2A eingesetzten Zustand mittels des Werkzeugs 56 gedreht, und zwar indem das Werkzeug 56 durch das Zugangsloch 48 in Eingriff mit dem Betätigungsabschnitt 55 gebracht wird und das Werkzeug 56 (und dadurch der gesamte Dreh-Verbinder 53A) um eine parallel zur y-Richtung verlaufende Drehachse gedreht wird, so dass wenigstens ein Eingriffsvorsprung 57, exemplarisch zwei Eingriffsvorsprünge 57, in Eingriff mit der Dreh-Verbinder-Vertiefung 1C (insbesondere mit Hinterschnitten 46) des zweiten Werkstücks 2B gebracht werden, wobei sich wenigstens ein Eingriffsvorsprung 57, exemplarisch zwei Eingriffsvorsprünge 57, in Eingriff mit der Dreh-Verbinder-Vertiefung 1A (insbesondere mit Hinterschnitten 46) des ersten Werkstücks 2A befinden.

Im Folgenden soll auf die Geometrien der verschiedenen, mit der Fräsvorrichtung 10 herstellbaren Vertiefungen 1 eingegangen werden.

Zunächst zu den Dübel-Vertiefungen:
Jede Dübel-Vertiefung hat exemplarisch die Form eines Zylinders. Insbesondere ist der Querschnitt jeder Dübel-Vertiefung konstant entlang der jeweiligen Zylinderachse (die exemplarisch parallel zur Tiefenrichtung z ausgerichtet ist). Jede Dübel-Vertiefung mündet (insbesondere ausschließlich) an der jeweiligen ersten Werkstückfläche 43A, 43B aus.

Jede Flachdübel-Vertiefung 1B verfügt über eine Grundfläche, deren Außenkontur zwei parallel verlaufende Geraden-Abschnitte 62 und zwei die Geraden-Abschnitte verbindende, abgerundete, insbesondere kreisbogenförmige, Endabschnitte 63 aufweist. Jede Runddübel-Vertiefung 1D hat exemplarisch die Form eines Kreiszylinders. Die Dübel-Vertiefung, insbesondere die Flachdübel-Vertiefung und/oder die Runddübel-Vertiefung, weist zweckmäßigerweise keinen Hinterschnitt auf.

Die Fräsvorrichtung 10 ist ausgebildet, als die Vertiefung 1 die Dübel-Vertiefung, insbesondere die Flachdübel-Vertiefung 1B und/oder die Runddübel-Vertiefung 1D herzustellen. Insbesondere verfügt die Fräsvorrichtung 10 über eine der Dübel-Vertiefung zugeordnete Bewegungsinformation zur Herstellung der Dübel-Vertiefung, insbesondere eine der Flachdübel-Vertiefung 1B zugeordnete Bewegungsinformation zur Herstellung der Flachdübel-Vertiefung 1B und/oder eine der Runddübel-Vertiefung 1D zugeordnete Bewegungsinformation zur Herstellung der Runddübel-Vertiefung 1D.

Während der Herstellung der Dübel-Vertiefung, insbesondere der Flachdübel-Vertiefung 1B und/oder der Runddübel-Vertiefung 1D führt die Fräsvorrichtung 10 eine Herstellprozedur mit der der herzustellenden Dübel-Vertiefung zugeordneten Bewegungsinformation durch und verfährt dabei gemäß der Bewegungsinformation das (die Abtragungsbewegung durchführende) Fräswerkzeug 17 in Breitenrichtung x und Querrichtung y zur Definition des Querschnitts der Dübel-Vertiefung und in z-Richtung zur Definition der Erstreckung der Dübel-Vertiefung entlang der Zylinderachse.

Als Nächstes soll auf die Dreh-Verbinder-Vertiefung 1A eingegangen werden. Die Dreh-Verbinder-Vertiefung 1A kann auch als Dreh-Verbinder-Vertiefung erster Art bezeichnet werden.

Die Dreh-Verbinder-Vertiefung 1A umfasst das Verbinderloch 45, das vorzugsweise über wenigstens einen Hinterschnitt 46 verfügt. Exemplarisch verfügt das Verbinderloch 45 über zwei Hinterschnitte 46. Das Verbinderloch 45 umfasst vorzugsweise einen Hauptabschnitt 64, der zweckmäßigerweise die Form eines Kreisscheibenabschnitts hat und zur zumindest teilweisen Aufnahme des Verbinderkörpers 54 dient. Der Hauptabschnitt 64 ist mit seiner Scheibenebene orthogonal zur ersten Werkstückfläche 43A und/oder orthogonal zur Querrichtung y ausgerichtet. Der Hauptabschnitt 64 mündet an der ersten Werkstückfläche 43A des ersten Werkstücks 2A, insbesondere ausschließlich an der ersten Werkstückfläche 43A des ersten Werkstücks 2A, aus. Jeder Hinterschnitt 46 hat exemplarisch einen bogenförmigen, insbesondere einen kreisbogenförmigen, Verlauf. Zweckmäßigerweise ist jeder Hinterschnitt 46 ringabschnittsförmig ausgeführt. Jeder Hinterschnitt 46 umläuft exemplarisch eine parallel zur Querrichtung y ausgerichtete Achse, insbesondere eine Ringachse, und/oder ist konzentrisch zum Hauptabschnitt 64 ausgerichtet. Exemplarisch schließt sich ein Hinterschnitt 46 in positiver Querrichtung y an den Hauptabschnitt 45 an und ein weiterer Hinterschnitt 46 schließt sich in negativer Querrichtung y an den Hauptabschnitt 45 an. Jeder Hinterschnitt 46 mündet an der ersten Werkstückfläche 43A, insbesondere ausschließlich an der ersten Werkstückfläche 43A, des ersten Werkstücks 2A aus.

Die Dreh-Verbinder-Vertiefung 1A umfasst das Zugangsloch 48, das exemplarisch zylindrisch ausgeführt ist und zweckmäßigerweise ausgehend von dem Hauptabschnitt 45 entlang der Querrichtung y zu der zweiten Werkstückfläche 44A verläuft und an dieser ausmündet. Die Zylinderachse des Zugangslochs 48 ist exemplarisch parallel zur y-Richtung ausgerichtet. Das Zugangsloch 48 mündet zweckmäßigerweise auch an der ersten Werkstückfläche 43A des ersten Werkstücks 2A aus und durchbricht exemplarisch die gemeinsame Kante 61 des ersten Werkstücks 2A.

Die Fräsvorrichtung 10 ist ausgebildet, als die Vertiefung 1 die Dreh-Verbinder-Vertiefung 1A herzustellen. Insbesondere verfügt die Fräsvorrichtung 10 über eine der Dreh-Verbinder-Vertiefung 1A zugeordnete Bewegungsinformation zur Herstellung der Dreh-Verbinder-Vertiefung.

Während der Herstellung der Dreh-Verbinder-Vertiefung 1A führt die Fräsvorrichtung 10 eine Herstellprozedur mit der der herzustellenden Dreh-Verbinder-Vertiefung 1A zugeordneten Bewegungsinformation durch und verfährt dabei gemäß der Bewegungsinformation das (die Abtragungsbewegung durchführende) Fräswerkzeug 17 in Breitenrichtung x, Querrichtung y und Tiefenrichtung z zur Definition der Vertiefung-Geometrie der Dreh-Verbinder-Vertiefung 1A.

Als Nächstes soll auf die Dreh-Verbinder-Vertiefung 1C eingegangen werden, die auch als Dreh-Verbinder-Vertiefung zweiter Art bezeichnet werden kann.

Die Dreh-Verbinder-Vertiefung 1C ist zweckmäßigerweise wie die Dreh-Verbinder-Vertiefung 1A ausgebildet, mit dem Unterschied, dass die Dreh-Verbinder-Vertiefung 1C kein Zugangsloch aufweist und exemplarisch an dem zweiten Werkstück 2B vorhanden ist. Die vorstehenden, auf die Dreh-Verbinder-Vertiefung erster Art gerichteten Erläuterungen gelten insoweit für die Dreh-Verbinder-Vertiefung zweiter Art, wobei die Bezüge auf die erste Werkstückfläche 43A durch Bezüge auf die erste Werkstückfläche 43B zu ersetzen sind.

Die Fräsvorrichtung 10 ist ausgebildet, als die Vertiefung 1 die Dreh-Verbinder-Vertiefung 1C herzustellen. Insbesondere verfügt die Fräsvorrichtung 10 über eine der Dreh-Verbinder-Vertiefung 1C zugeordnete Bewegungsinformation zur Herstellung der Dreh-Verbinder-Vertiefung.

Während der Herstellung der Dreh-Verbinder-Vertiefung 1C führt die Fräsvorrichtung 10 eine Herstellprozedur mit der der herzustellenden Dreh-Verbinder-Vertiefung 1C zugeordneten Bewegungsinformation durch und verfährt dabei gemäß der Bewegungsinformation das (die Abtragungsbewegung durchführende) Fräswerkzeug 17 in Breitenrichtung x, Querrichtung y und Tiefenrichtung z zur Definition der Vertiefung-Geometrie der Dreh-Verbinder-Vertiefung 1C.

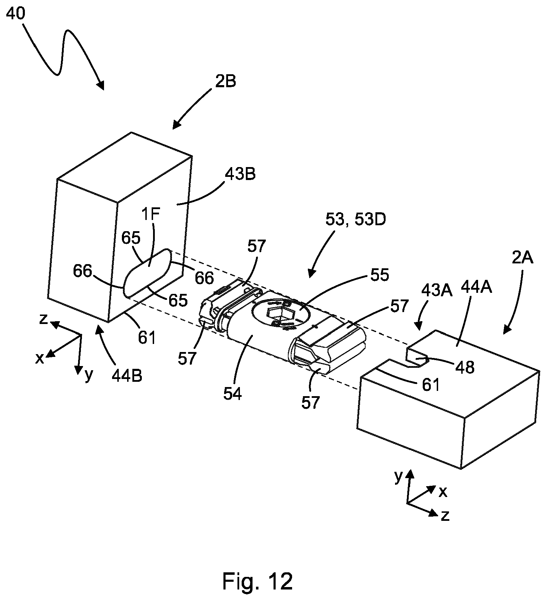

Die Figuren 12 bis 16 zeigen eine Werkstückanordnung 40, die ein erstes Werkstück 2A und ein zweites Werkstück 2B umfasst, sowie einen Verbinder 53, der exemplarisch als Kinematik-Verbinder 53D ausgeführt ist.

Der Kinematik-Verbinder 53D verfügt über einen Verbinderkörper 54 sowie einen am Verbinderkörper 54 angeordneten (und relativ zu diesem beweglich gelagerten, insbesondere drehbar gelagerten) Betätigungsabschnitt 55, der exemplarisch eine insbesondere sechskantige Aussparung aufweist, in die insbesondere das exemplarisch als Innensechskant ausgeführte Werkzeug 56 eingesetzt werden kann. Der Kinematik-Verbinder 53D verfügt ferner über Eingriffsvorsprünge 57, die an dem Verbinderkörper 54 angeordnet sind und relativ zu diesem beweglich gelagert sind. Die Eingriffsvorsprünge 57 sind kinematisch mit dem Betätigungsabschnitt 55 gekoppelt, beispielsweise über ein oder mehrere Kurvengetriebe, insbesondere derart, dass die Eingriffsvorsprünge 57 über eine Bewegung, insbesondere eine Drehung, des Betätigungsabschnitts 55 wahlweise in eine Eingriff-Stellung oder eine Einsetz-Stellung versetzbar sind. In der Eingriff-Stellung ragen die Eingriffsvorsprünge 57 weiter vom Verbinderkörper 54 ab als in der Einsetz-Stellung, insbesondere entlang der Querrichtung y, also zweckmäßigerweise in positiver und/oder negativer Querrichtung y. Exemplarisch sind vier Eingriffsvorsprünge 57 vorhanden, wobei an jedem entlang der Tiefenrichtung z befindlichen Ende des Kinematik-Verbinders 53D zwei Eingriffsvorsprünge 57 vorhanden sind, die zweckmäßigerweise in der Eingriff-Stellung (insbesondere entlang der Querrichtung y) weiter voneinander beabstandet sind als in der Einsetz-Stellung.

Das erste Werkstück 2A verfügt über eine erste Werkstückfläche 43A, in der exemplarisch eine Vertiefung 1 vorhanden ist, und zwar eine Kinematik-Verbinder-Vertiefung 1E, zur teilweisen Aufnahme des Kinematik-Verbinders 53D. Die Kinematik-Verbinder-Vertiefung 1E verfügt exemplarisch über das Verbinderloch 45 und das Zugangsloch 48. Das erste Werkstück 2A verfügt ferner über eine zweite Werkstückfläche 44A, die exemplarisch orthogonal zur ersten Werkstückfläche 43A des ersten Werkstücks 2A ausgerichtet ist und insbesondere über eine gemeinsame Kante 61 des ersten Werkstücks 2A mit der ersten Werkstückfläche 43A des ersten Werkstücks 2A verbunden ist.

Das zweite Werkstück 2B verfügt über eine erste Werkstückfläche 43B, in der exemplarisch eine Vertiefung 1 vorhanden ist, und zwar eine Kinematik-Verbinder-Vertiefung 1F, zur teilweisen Aufnahme des Kinematik-Verbinders 53D. Die Kinematik-Verbinder-Vertiefung 1F verfügt exemplarisch über das Verbinderloch 45 und insbesondere über kein Zugangsloch 48. Das zweite Werkstück 2B verfügt ferner über eine zweite Werkstückfläche 44B, die exemplarisch orthogonal zur ersten Werkstückfläche 43B des zweiten Werkstücks 2B ausgerichtet ist und insbesondere über eine gemeinsame Kante 61 des zweiten Werkstücks 2B mit der ersten Werkstückfläche 43B des zweiten Werkstücks 2B verbunden ist.

Die Werkstückanordnung 40 ist in einen zusammengesetzten Zustand versetzbar, in dem das erste Werkstück 2A mit dem zweiten Werkstück 2B über den Kinematik-Verbinder 53D verbunden ist, insbesondere derart, dass das zweite Werkstück 2B relativ zum ersten Werkstück 2A fixiert ist, insbesondere in sämtliche Raumrichtungen, und/oder dass das zweite Werkstück 2B mit seiner ersten Werkstückfläche 43B an der ersten Werkstückfläche 43A des ersten Werkstücks 2A anliegt, insbesondere flächig. In dem zusammengesetzten Zustand ist der Kinematik-Verbinder 53D in der Kinematik-Verbinder-Vertiefung 1E, des ersten Werkstücks 2A und in der Kinematik-Verbinder-Vertiefung 1F des zweiten Werkstücks 2B eingesetzt. Zum Einsetzen des Kinematik-Verbinders 53D in die beiden Kinematik-Verbinder-Vertiefungen 1E, 1F befinden sich exemplarisch zunächst die Eingriffsvorsprünge 57 in der Einsetz-Stellung. Exemplarisch wird zur Befestigung des zweiten Werkstücks 2B an das erste Werkstück 1A der Betätigungsabschnitt 55 in einem Zustand, in dem der Kinematik-Verbinder 53D in die Kinematik-Verbinder-Vertiefung 1E des ersten Werkstücks 2A und in die Kinematik-Verbinder-Vertiefung 1F des zweiten Werkstücks 2B eingesetzt ist, mittels des Werkzeugs 56 relativ zum Verbinderköper 54 betätigt, insbesondere gedreht, und zwar vorzugsweise indem das Werkzeug 56 durch das Zugangsloch 48 in Eingriff mit dem Betätigungsabschnitt 55 gebracht wird und das Werkzeug 56 (und dadurch der Betätigungsabschnitt 55) um eine parallel zur y-Richtung verlaufende Drehachse gedreht wird, um die Eingriff-Stellung bereitzustellen, so dass wenigstens ein Eingriffsvorsprung 57, exemplarisch zwei Eingriffsvorsprünge 57, in Eingriff mit der Kinematik-Vertiefung 1E (insbesondere mit Hinterschnitten 46) des ersten Werkstücks 2A gebracht wird/werden und dass wenigstens ein Eingriffsvorsprung 57, exemplarisch zwei Eingriffsvorsprünge 57, in Eingriff mit der Kinematik-Vertiefung 1F (insbesondere mit Hinterschnitten 46) des zweiten Werkstücks 2B gebracht wird/werden.

Die Kinematik-Verbinder-Vertiefung 1E kann auch als Kinematik-Verbinder-Vertiefung erster Art bezeichnet werden.

Die Kinematik-Verbinder-Vertiefung 1E umfasst das Verbinderloch 45, das vorzugsweise über wenigstens einen Hinterschnitt 46 verfügt. Exemplarisch verfügt das Verbinderloch 45 über zwei Hinterschnitte 46. Das Verbinderloch 45 umfasst vorzugsweise einen Hauptabschnitt 64, der zur zumindest teilweisen Aufnahme des Verbinderkörpers 54 dient. Der Hauptabschnitt 64 mündet an der ersten Werkstückfläche 43A, insbesondere ausschließlich an der ersten Werkstückfläche 43A, des ersten Werkstücks 2A aus. Der Hauptabschnitt 64 hat exemplarisch die Form eines Zylinders. Insbesondere ist der x-y-Querschnitt des Hauptabschnitts 64 konstant entlang der Zylinderachse (die exemplarisch parallel zur Tiefenrichtung z ausgerichtet ist). Der Hauptabschnitt 64 verfügt über den x-y-Querschnitt, mit dem der Hauptabschnitt 64 an der ersten Werkstückfläche 43A des ersten Werkstücks 2A ausmündet und/oder dessen Außenkontur zwei parallel verlaufende Geraden-Abschnitte 65 und zwei die Geraden-Abschnitte 65 verbindende, abgerundete, insbesondere kreisbogenförmige, Endabschnitte 66 aufweist. Der x-y-Querschnitt ist insbesondere länglich ausgeführt und zweckmäßigerweise mit seiner Längsachse parallel zur Breitenrichtung x ausgerichtet. Jeder Hinterschnitt 46 hat exemplarisch einen geraden Verlauf. Zweckmäßigerweise ist jeder Hinterschnitt 46 zylindrisch ausgeführt, insbesondere mit einer parallel zur Tiefenrichtung z ausgerichteten Zylinderachse. Vorzugsweise weist jeder Hinterschnitt 46 einen insbesondere als Vieleck, beispielsweise als Viereck, ausgeführten Querschnitt (insbesondere x-y-Querschnitt) parallel zur Zylinderachse des Hauptabschnitts 64 (beispielsweise parallel zur Tiefenrichtung z) auf. Beispielsweise verfügt der Querschnitt über einen oder mehrere Fasen, beispielsweise zu dem Nutgrund 47 und/oder dem Hauptabschnitt 64. Insbesondere ist jeder Hinterschnitt 46 als längliche Aussparung ausgeführt, wobei die Längsachse der länglichen Aussparung parallel zur Breitenrichtung x ausgerichtet ist. Exemplarisch schließt sich ein Hinterschnitt 46 in positiver Querrichtung y an den Hauptabschnitt 45 an und ein weiterer Hinterschnitt 46 schließt sich in negativer Querrichtung y an den Hauptabschnitt 45 an. Zweckmäßigerweise ist der Abstand jedes Hinterschnitts 46 zu der ersten Werkstückfläche 43A des ersten Werkstücks 2A über die (insbesondere gesamte) x-Erstreckung der Kinematik-Verbinder-Vertiefung 1E hinweg konstant.

Die Kinematik-Vertiefung 1E umfasst das Zugangsloch 48, das exemplarisch zylindrisch ausgeführt ist und zweckmäßigerweise ausgehend von dem Hauptabschnitt 45 entlang der Querrichtung y zu der zweiten Werkstückfläche 44A des ersten Werkstücks 2A verläuft und an dieser ausmündet. Die Zylinderachse des Zugangslochs 48 ist exemplarisch parallel zur y-Richtung ausgerichtet. Das Zugangsloch 48 mündet zweckmäßigerweise auch an der ersten Werkstückfläche 43A des ersten Werkstücks 2A aus und durchbricht exemplarisch die gemeinsame Kante 61 des ersten Werkstücks 2A.

Die Fräsvorrichtung 10 ist ausgebildet, als die Vertiefung 1 die Kinematik-Verbinder-Vertiefung 1E herzustellen. Insbesondere verfügt die Fräsvorrichtung 10 über eine der Kinematik-Verbinder-Vertiefung 1E zugeordnete Bewegungsinformation zur Herstellung der Kinematik-Verbinder-Vertiefung 1E.

Während der Herstellung der Kinematik-Verbinder-Vertiefung 1E führt die Fräsvorrichtung 10 eine Herstellprozedur mit der der herzustellenden Kinematik-Verbinder-Vertiefung 1E zugeordneten Bewegungsinformation durch und verfährt dabei gemäß der Bewegungsinformation das (die Abtragungsbewegung durchführende) Fräswerkzeug 17 in Breitenrichtung x, Querrichtung y und Tiefenrichtung z zur Definition der Vertiefung-Geometrie der Kinematik-Verbinder-Vertiefung 1E.

Als Nächstes soll auf die Kinematik-Verbinder-Vertiefung 1F eingegangen werden, die auch als Kinematik-Verbinder-Vertiefung zweiter Art bezeichnet werden kann.

Die Kinematik-Verbinder-Vertiefung 1F ist zweckmäßigerweise wie die Kinematik-Verbinder-Vertiefung 1E ausgebildet, mit dem Unterschied, dass die Kinematik-Verbinder-Vertiefung 1F kein Zugangsloch aufweist und exemplarisch an dem zweiten Werkstück 2B vorhanden ist. Optional verfügt die Kinematik-Verbinder-Vertiefung 1F über eine geringere Erstreckung in Tiefenrichtung z als die Kinematik-Verbinder-Vertiefung 1E. Die vorstehenden, auf die Kinematik-Verbinder-Vertiefung erster Art gerichteten Erläuterungen gelten insoweit für die Kinematik-Verbinder-Vertiefung zweiter Art, wobei die Bezüge auf die erste Werkstückfläche 43A des ersten Werkstücks 2A durch Bezüge auf die erste Werkstückfläche 43B des zweiten Werkstücks 2B zu ersetzen sind.

Die Fräsvorrichtung 10 ist ausgebildet, als die Vertiefung 1 die Kinematik-Verbinder-Vertiefung 1F herzustellen. Insbesondere verfügt die Fräsvorrichtung 10 über eine der Kinematik-Verbinder-Vertiefung 1F zugeordnete Bewegungsinformation zur Herstellung der Kinematik-Verbinder-Vertiefung 1F.

Während der Herstellung der Kinematik-Verbinder-Vertiefung 1F führt die Fräsvorrichtung 10 eine Herstellprozedur mit der der herzustellenden Kinematik-Verbinder-Vertiefung 1F zugeordneten Bewegungsinformation durch und verfährt dabei gemäß der Bewegungsinformation das (die Abtragungsbewegung durchführende) Fräswerkzeug 17 in Breitenrichtung x, Querrichtung y und Tiefenrichtung z zur Definition der Vertiefung-Geometrie der Kinematik-Verbinder-Vertiefung 1F.

Bevorzugt verfügt die Fräsvorrichtung 10 über eine der Flachdübel-Vertiefung 1B zugeordnete Bewegungsinformation und/oder über eine der Runddübel-Vertiefung 1D zugeordnete Bewegungsinformation und/oder über eine der Dreh-Verbinder-Vertiefung 1A zugeordnete Bewegungsinformation und/oder über eine der Dreh-Verbinder-Vertiefung 1C zugeordnete Bewegungsinformation und/oder über eine der Kinematik-Verbinder-Vertiefung 1E zugeordnete Bewegungsinformation und/oder über eine der Kinematik-Verbinder-Vertiefung 1F zugeordnete Bewegungsinformation.

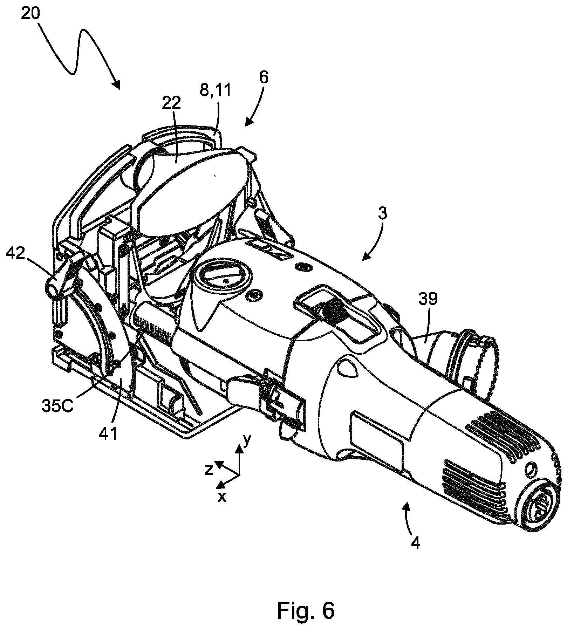

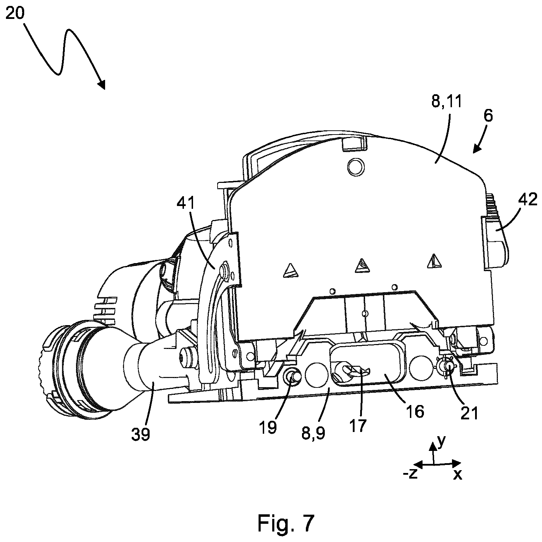

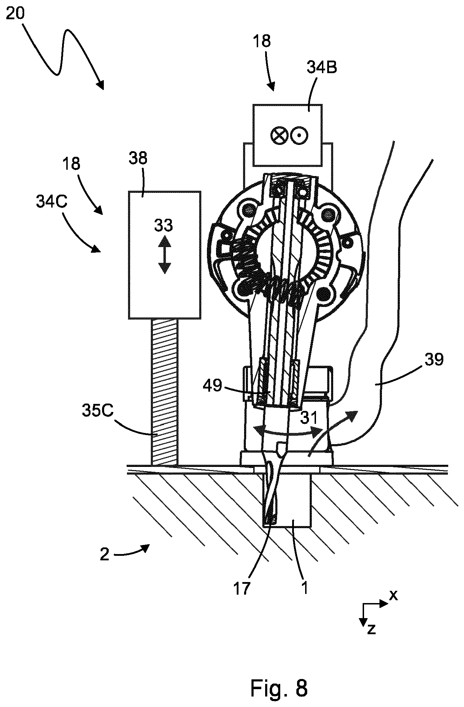

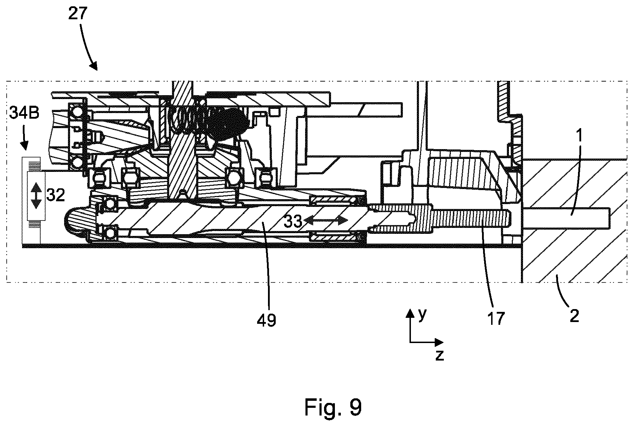

Im Folgenden soll auf eine Fräsvorrichtung 20 gemäß einer zweiten Ausführungsform eingegangen werden. In den Figuren 6 bis 9 ist eine exemplarische Ausgestaltung der Fräsvorrichtung 20 gezeigt. Vorzugsweise ist die Fräsvorrichtung 20 bis auf die nachstehend erläuterten Unterschiede wie die Fräsvorrichtung 10 ausgebildet, so dass die auf die Fräsvorrichtung 10 bezogenen Erläuterungen insoweit auch für die Fräsvorrichtung 20 gelten.

Optional ist bei der Fräsvorrichtung 20 der erste Positionier-Freiheitsgrad 31 ein Schwenk-Freiheitsgrad, insbesondere um eine in Querrichtung y verlaufende Schwenkachse. Alternativ kann der erste Positionier-Freiheitsgrad 31 auch (wie bei der ersten Ausführungsform) ein in Breitenrichtung x verlaufender linearer Positionier-Freiheitsgrad sein.

Die Fräsvorrichtung 20 verfügt über den zweiten Linearantrieb 34B, der dazu dient, den in Querrichtung y verlaufenden zweiten Positionier-Freiheitsgrad 32 für die Positionierung des Fräswerkzeugs 17 bereitzustellen.

Bei der Fräsvorrichtung 20 ist das Gehäuse 3 länglich ausgeführt und ist mit seiner Längsachse in z-Richtung ausgerichtet. Ein in Bezug auf die z-Richtung hintere Gehäuse-Abschnitt des Gehäuses 3, also insbesondere der der Anlageeinrichtung 6 abgewandten Seite, bildet exemplarisch den Handgriff 4. Insbesondere ist dieser Gehäuse-Abschnitt derart dimensioniert, dass er von einer Hand umgriffen werden kann.

Das Gehäuse 3 bildet zusammen mit der elektrischen Antriebseinrichtung 27 und dem Fräswerkzeug 17 eine Gehäuse-Baugruppe, die zweckmäßigerweise relativ zur Anlageeinrichtung 6 in Tiefenrichtung z linearbeweglich gelagert ist. Die Positioniereinrichtung 18 ist ausgebildet, die Gehäuse-Baugruppe relativ zur Anlageeinrichtung 6 zu bewegen, vorzugsweise mittels des Linearantriebs 34C, um das Fräswerkzeug 17 entlang des dritten Positionier-Freiheitsgrads 33 zu positionieren. Exemplarisch verfügt der Linearantrieb 34C über einen der Gehäuse-Baugruppe zugehörigen Elektromotor 38 und ein beispielsweise als Zahnstange ausgebildetes Führungselement 35C, das mit der Anlageeinrichtung 6 gekoppelt ist. Durch einen von dem Elektromotor 38 bereitgestellten Antrieb kann eine relative Linearbewegung zwischen dem Elektromotor 38 und dem Führungselement 35C bewirkt werden, um dadurch die Positionierung entlang des dritten Positionier-Freiheitsgrads 33 bereitzustellen.

Optional verfügt die Fräsvorrichtung 20 über einen Absaugkanal 39, über den bei der Herstellung der Vertiefung 1 entstehende Partikel, insbesondere Späne, abgesaugt werden können.

Exemplarisch verfügt die Fixiereinrichtung über Strukturabschnitt-Führungselemente 41, die vorzugsweise als Führungskulissen ausgebildet ist. Exemplarisch sind die Strukturabschnitt-Führungselemente 41 an dem zweiten Strukturabschnitt 11 befestigt und werden mit diesem um die Schwenkachse 15 mitverschwenkt. Vorzugsweise definieren die Strukturabschnitt-Führungselemente 41 die Schwenkachse 15 oder tragen zu der Definition der Schwenkachse 15 bei. Die Strukturabschnitt-Führungselemente 41 können insbesondere als Teil des Schwenklagers angesehen werden. Die Fixiereinrichtung verfügt vorzugsweise über ein Betätigungselement 42, das exemplarisch als Hebel ausgeführt ist und über dessen Betätigung der zweite Strukturabschnitt 11 in seiner aktuellen Schwenkposition relativ zum ersten Strukturabschnitt 9 fixierbar ist, beispielsweise mittels Kraftschluss und/oder Formschluss, insbesondere dadurch, dass mittels der Betätigungselements 42 wenigstens ein Strukturabschnitt-Führungselement 41 in seiner aktuellen Schwenkposition relativ zum ersten Strukturabschnitt 9 fixiert wird, beispielsweise mittels Kraftschluss und/oder Formschluss.

Im Folgenden soll ein Verfahren zum Betrieb der handgehaltenen Fräsvorrichtung, insbesondere der Fräsvorrichtung 10 oder der Fräsvorrichtung 20, beschrieben werden.

Das Verfahren umfasst einen Schritt, bei dem die Fräsvorrichtung 10, 20 an dem Werkstück 2 positioniert wird, insbesondere so dass die Fräsvorrichtung 10, 20 (insbesondere während der Herstellung der Vertiefung 1) gleichzeitigen mit beiden Strukturabschnitten 9, 11 stationär an dem Werkstück 2 anliegt.

Das Verfahren umfasst einen weiteren Schritt, bei dem die elektrische Positioniereinrichtung 18 (insbesondere von der Steuereinheit 37) gemäß der Bewegungsinformation angesteuert wird, so dass die elektrische Positioniereinrichtung 18 das Fräswerkzeug 17 in die Bewegungsabfolge versetzt, während das Fräswerkzeug 17 die rotative Abtragungsbewegung durchführt, um die Vertiefung 1 mit der (insbesondere durch die Bewegungsabfolge) vorgegebenen Vertiefung-Geometrie herzustellen.

Bevorzugt liegt die Fräsvorrichtung 10, 20 während der gesamten Bewegungsabfolge gleichzeitig mit beiden Strukturabschnitten 9, 11 stationär an dem Werkstück 2 an. Mit der Bewegungsabfolge wird zweckmäßigerweise sowohl das Verbinderloch 45 als auch das Zugangsloch 48 hergestellt. Vorzugsweise erfolgt keine Umpositionierung der Fräsvorrichtung 10, 20 relativ zu Werkstück zwischen der Herstellung des Verbinderlochs 45 und der Herstellung des Zugangslochs 48.

Bevorzugt umfasst die Vertiefung 1 das an der ersten Werkstückfläche 43 des Werkstücks 2 ausmündende, sich entlang der Breitenrichtung x erstreckende Verbinderloch 45 sowie ein Zugangsloch 48, das sich von dem Verbinderloch 45 entlang der orthogonal zur Breitenrichtung x ausgerichteten Querrichtung y zu der zweiten Werkstückfläche 44 des Werkstücks 2 erstreckt und an dieser ausmündet. Bevorzugt liegt die Fräsvorrichtung 10, 20 während der Durchführung der gesamten Bewegungsabfolge, mit der sowohl das Verbinderloch 45 als auch das Zugangsloch 48 hergestellt wird, gleichzeitig mit beiden Strukturabschnitten 9, 11 stationär an dem Werkstück 2 an.

Bevorzugt wird das Fräswerkzeug 17 bei der Herstellung des Zungangslochs 48 durch die Schwenkachse 15 hindurch verfahren.

Optional wird nach der Herstellung der Vertiefung 1 ein Verbinder 53 in die Vertiefung 1, insbesondere in das Verbinderloch 45, eingesetzt, insbesondere nach Abschluss der Herstellung der Vertiefung 1. Der Verbinder 53, der in das Verbinderloch 45 eingesetzt wird, ist vorzugsweise einer der vorstehend beschriebenen Verbinder, beispielsweise der Dreh-Verbinder 53A oder der Flachdübel 53B oder der Runddübel 53C oder der Kinematik-Verbinder 53D.

Optional wird mit dem Werkstück 2 (als erstes Werkstück 2A) die Werkstückanordnung 30 oder die Werkstückanordnung 40 hergestellt.

Bevorzugt stellt die Fräsvorrichtung 10, 20 das Zugangsloch 48 ausgehend von der ersten Werkstückfläche 43 her, so dass vorzugsweise keine Bohrschablone (insbesondere zur Herstellung des Zugangslochs 48) nötig ist. Beispielsweise wird (insbesondere als die Fräsvorrichtung 10, 20) eine Dübelfräse oder eine Oberfräse bereitgestellt, mit der das Zugangsloch 48 (das beispielsweise eine Quernut ist) herzustellen, insbesondere in einer vorgegebenen Relativposition zum Verbinderloch 45 (das beispielsweise als Koppelnut ausgeführt ist). Alternativ kann eine industrielle CNC-Fräsmaschine zur Herstellung des Zugangslochs 48 (insbesondere der Quernut) und des Verbinderlochs 45 (insbesondere der Koppelnut) bereitgestellt sein.

Beispielsweise wird zuerst mit der Verbinderfräse 10, 20 eine erste Vertiefung, insbesondere eine der vorstehend erläuterten Vertiefungen 1, in der ersten Werkstückfläche 43 hergestellt, während die Verbinderfräse 10, 20 mit der Anlageeinrichtung 6 stationär an der ersten Werkstückfläche 43 anliegt. Danach wird die Verbinderfräse 10, 20 händisch umpositioniert, beispielsweise an der ersten Werkstückfläche 43 oder an eine andere Werkstückfläche. Anschließend wird mit der Verbinderfräse 10, 20 eine zweite Vertiefung hergestellt, während die Verbinderfräse 10, 20 mit der Anlageeinrichtung 6 stationär an der ersten Werkstückfläche oder der anderen Werkstückfläche anliegt. Die zweite Vertiefung ist insbesondere eine der vorstehend erläuterten Vertiefungen 1. Die zweite Vertiefung unterscheidet sich zweckmäßigerweise von der ersten Vertiefung. Die zweite Vertiefung wird an der ersten Werkstückfläche 43 oder an der anderen Werkstückfläche hergestellt.

Optional sind die erste Vertiefung und die zweite Vertiefung identisch, beispielsweise umfassen die erste Vertiefung und die zweite Vertiefung jeweils ein jeweiliges Verbinderloch 45 und ein jeweiliges Zugangsloch 48. Beispielsweise wird die erste Vertiefung an der ersten Werkstückfläche eines ersten Werkstücks hergestellt und die zweite Vertiefung an der ersten Werkstückfläche eines zweiten Werkstücks. Beispielsweise liegt die Verbinderfräse 10, 20 bei der Herstellung der ersten Vertiefung mit der Anlageeinrichtung 6 gleichzeitig an der ersten Werkstückfläche und einer zweiten Werkstückfläche des ersten Werkstücks an, wobei der Winkel 12 vorzugsweise größer als 90 Grad ist. Beispielsweise liegt die Verbinderfräse 10, 20 bei der Herstellung der zweiten Vertiefung mit der Anlageeinrichtung 6 gleichzeitig an der ersten Werkstückfläche und einer zweiten Werkstückfläche des zweiten Werkstücks an, wobei der Winkel 12 vorzugsweise größer als 90 Grad und kleiner als 180 Grad ist.

## Patentansprüche

1. Handgehaltene Fräsvorrichtung (10, 20) zur Herstellung einer Vertiefung (1) in einem Werkstück (2), umfassend:
einen Handgriff (4) zum Greifen der Fräsvorrichtung (10, 20) und zum Positionieren der Fräsvorrichtung (10, 20) relativ zu dem Werkstück (2),
eine Anlageeinrichtung (6) mit einer Anlagestruktur (8), die einen ersten Strukturabschnitt (9) und einen zweiten Strukturabschnitt (11) zur gleichzeitigen stationären Anlage an dem Werkstück (2) während der Herstellung der Vertiefung (1) umfasst, wobei der erste Strukturabschnitt (9) eine erste Anlageebene definiert und der zweite Strukturabschnitt (11) eine zweite Anlageebene definiert, und wobei der zweite Strukturabschnitt (11) relativ zum ersten Strukturabschnitt (9) verschwenkbar gelagert und in einer Mehrzahl an verschiedenen Schwenkpositionen relativ zum ersten Strukturabschnitt (9) fixierbar ist, um zwischen den Anlageebenen einen an das Werkstück (2) angepassten festen Winkel (12) einzustellen,
ein Fräswerkzeug (17),
eine elektrische Antriebseinrichtung (27), die ausgebildet ist, das Fräswerkzeug (17) in eine rotative Abtragungsbewegung zu versetzen,
eine elektrische Positioniereinrichtung (26), die ausgebildet ist, das Fräswerkzeug (17) entlang wenigstens zweier insbesondere linearer Positionier-Freiheitsgrade (31, 32, 33) relativ zu der Anlagestruktur (8) zu verfahren,
eine elektronische Steuereinheit (37), die ausgebildet ist, die elektrische Positioniereinrichtung (26) gemäß einer Bewegungsinformation anzusteuern, so dass die elektrische Positioniereinrichtung (26) das Fräswerkzeug (17) in eine durch die Bewegungsinformation definierte Bewegungsabfolge entlang der wenigstens zwei Positionier-Freiheitsgrade (31, 32, 33) versetzt, während das Fräswerkzeug (17) die rotative Abtragungsbewegung durchführt, um die Vertiefung (1) mit einer vorgegebenen Vertiefung-Geometrie herzustellen.

2. Fräsvorrichtung (10, 20) nach Anspruch 1, wobei der zweite Strukturabschnitt (11) um eine orthogonal zur Drehachse der Abtragungsbewegung ausgerichtete Schwenkachse (15) verschwenkbar ist.

3. Fräsvorrichtung (10, 20) nach Anspruch 1 oder 2, ferner umfassend einen an dem zweiten Strukturabschnitt (11) angeordneten Anlagestruktur-Handgriff (22), über den der zweite Strukturabschnitt (11) relativ zum ersten Strukturabschnitt (9) verschwenkbar ist.

4. Fräsvorrichtung (10, 20) nach einem voranstehenden Anspruch, wobei die Anlagestruktur (8) eine Öffnung (16) aufweist, innerhalb der das Fräswerkzeug (17) durch die elektrische Positioniereinrichtung (18) positionierbar ist, wobei sich die Öffnung (16) insbesondere über den ersten Strukturabschnitt (9) und den zweiten Strukturabschnitt (11) erstreckt.

5. Fräsvorrichtung (10, 20) nach einem voranstehenden Anspruch, wobei der zweite Strukturabschnitt (11) relativ zum ersten Strukturabschnitt (9) um eine/die Schwenkachse (15) verschwenkbar gelagert ist und die Schwenkachse (15) einen durch die wenigstens zwei Positionier-Freiheitsgrade (31, 32, 33) gebildeten Verfahrbereich des Fräswerkzeugs (17) schneidet.

6. Fräsvorrichtung (10, 20) nach einem voranstehenden Anspruch, wobei einer der Positionier-Freiheitsgrade (33) in Achsrichtung der Drehachse der Abtragungsbewegung und/oder orthogonal zu der ersten Anlageebene verläuft, und/oder wobei einer der Positionier-Freiheitsgrade (31, 32) orthogonal zur Drehachse der Abtragungsbewegung und/oder parallel zu der ersten Anlageebene verläuft.

7. Fräsvorrichtung (10, 20) nach einem voranstehenden Anspruch, wobei die Positioniereinrichtung (18) ausgebildet ist, das Fräswerkzeug (17) entlang dreier insbesondere linearer Positionier-Freiheitsgrade (31, 32, 33) relativ zu der Anlagestruktur (8) zu verfahren, wobei die Positionier-Freiheitsgrade (31, 32, 33) vorzugsweise orthogonal zueinander ausgerichtet sind.

8. Fräsvorrichtung (10, 20) nach Anspruch 7, wobei die Bewegungsinformation die Bewegungsabfolge entlang der drei Positionier-Freiheitsgrade (31, 32, 33) definiert und die Bewegungsabfolge die Vertiefung-Geometrie in Bezug auf die drei Positionier-Freiheitsgrade (31, 32, 33) vorgibt.

9. Fräsvorrichtung (10, 20) nach einem der voranstehenden Ansprüche, wobei ein maximaler Verfahrweg für die Positionierung des Fräswerkzeugs (17) entlang eines in einer Breitenrichtung (x) verlaufenden Positionier-Freiheitsgrads (31) wenigstes 1,3 cm beträgt und/oder ein maximaler Verfahrweg für die Positionierung des Fräswerkzeugs (17) entlang eines in einer Querrichtung (y) verlaufenden Positionier-Freiheitsgrade (32) wenigstes 0,4 cm beträgt und/oder ein maximaler Verfahrweg für die Positionierung des Fräswerkzeugs (17) entlang eines in einer Tiefenrichtung (z) verlaufenden Positionier-Freiheitsgrads (33) wenigstes 1,1 cm beträgt.

10. Fräsvorrichtung (10, 20) nach einem der voranstehenden Ansprüche, wobei die elektronische Steuereinheit (37) über mehrere verschiedene Bewegungsinformationen verfügt, wobei jede Bewegungsinformation einer jeweiligen Vertiefung-Geometrie zugeordnet ist, wobei sich die Vertiefungs-Geometrien voneinander unterscheiden, und wobei die Steuereinheit (37) ausgebildet ist, die Positioniereinrichtung (26) gemäß einer der Bewegungsinformationen anzusteuern um zu bewirken, dass die Vertiefung mit der dieser Bewegungsinformation zugeordneten Vertiefung-Geometrie hergestellt wird.

11. Fräsvorrichtung (10) nach einem voranstehenden Anspruch, umfassend ein Gehäuse (3), an dem der Handgriff (4) angeordnet ist, wobei die Erstreckung des Gehäuses (3) in einer orthogonal zur Drehachse der Abtragungsbewegung ausgerichteten Breitenrichtung (x) größer ist als die Erstreckung des Gehäuses (3) in Richtung der Drehachse.

12. Verfahren zum Betrieb einer handgehaltenen Fräsvorrichtung (10, 20) nach einem der voranstehenden Ansprüche, umfassend die Schritte:
- Positionieren der Fräsvorrichtung (10, 20) an dem Werkstück (2), so dass die Fräsvorrichtung (10, 20) während der Herstellung der Vertiefung (1) gleichzeitigen mit beiden Strukturabschnitten (9, 11) stationär an dem Werkstück (2) anliegt
- Ansteuern der elektrischen Positioniereinrichtung (26) gemäß der Bewegungsinformation, so dass die elektrische Positioniereinrichtung (26) das Fräswerkzeug (17) in die Bewegungsabfolge versetzt, während das Fräswerkzeug (17) die rotative Abtragungsbewegung durchführt, um die Vertiefung (1) mit der vorgegebenen Vertiefung-Geometrie herzustellen.

13. Verfahren nach Anspruch 12, wobei die Fräsvorrichtung (10, 20) während der gesamten Bewegungsabfolge gleichzeitig mit beiden Strukturabschnitten (9, 11) stationär an dem Werkstück (2) anliegt.

14. Verfahren nach Anspruch 13, wobei die Vertiefung (1) ein an einer ersten Werkstückfläche (43) des Werkstücks (2) ausmündendes, sich entlang einer Breitenrichtung (x) erstreckendes Verbinderloch (45) umfasst sowie ein Zugangsloch (48), das sich von dem Verbinderloch (45) entlang einer orthogonal zur Breitenrichtung (x) ausgerichteten Querrichtung (y) zu einer zweiten Werkstückfläche (44) des Werkstücks (2) erstreckt und an dieser ausmündet, und wobei die Fräsvorrichtung (10, 20) während der Durchführung der gesamten Bewegungsabfolge, mit der sowohl das Verbinderloch (45) als auch das Zugangsloch (48) hergestellt wird, gleichzeitig mit beiden Strukturabschnitten (9, 11) stationär an dem Werkstück (2) anliegt.

15. Verfahren nach Anspruch 14, wobei der zweite Strukturabschnitt (11) relativ zum ersten Strukturabschnitt (9) um eine/die Schwenkachse (15) verschwenkbar gelagert ist und die Schwenkachse (15) einen durch die wenigstens zwei Positionier-Freiheitsgrade (31, 32, 33) gebildeten Verfahrbereich des Fräswerkzeugs (17) schneidet, und wobei das Fräswerkzeug (17) bei der Herstellung des Zungangslochs (48) durch die Schwenkachse (15) hindurch verfahren wird.

## Claims

1. Hand-held milling device (10, 20) for creating a recess (1) in a workpiece (2), comprising:
a handle (4) for gripping the milling device (10, 20) and for positioning the milling device (10, 20) relative to the workpiece (2),
a contact device (6) with a contact structure (8) which has a first structure section (9) and a second structure section (11) for the simultaneous stationary bearing contact on the workpiece (2) during the creation of the recess (1), wherein the first structure section (9) defines a first contact plane and the second structure section (11) defines a second contact plane, and wherein the second structure section (11) is pivotably mounted relative to the first structure section (9) and can be fixed in a plurality of different pivot positions relative to the first structure section (9), in order to set a fixed angle (12) between the contact planes, said angle being adapted to the workpiece (2),
a milling tool (17),
an electrical drive device (27) which is designed to bring the milling tool (17) into a rotative material-removing movement,
an electrical positioning device (26) which is designed to displace the milling tool (17) relative to the contact structure (8) along at least two, in particular linear, positioning degrees of freedom (31, 32, 33),
an electronic control unit (37) which is designed to control the electrical positioning device (26) according to movement information such that the electrical positioning device (26) brings the milling tool (17) into a movement sequence which is defined by the movement information, along the at least two positioning degrees of freedom (31, 32, 33) whilst the milling tool (17) carries out the rotative material-removing movement, in order to create the recess (1) with a predefined recess geometry.

2. Milling device (10, 20) according to claim 1, wherein the second structure section (11) is pivotable about a pivot axis (15) which is aligned orthogonally to the rotation axis of the material-removing movement.

3. Milling device (10, 20) according to claim 1 or 2, further comprising a contact structure handle (22) which is arranged on the second structure section (11) and via which the second structure section (11) is pivotable relative to the first structure section (9).

4. Milling device (10, 20) according to a preceding claim, wherein the contact structure (8) comprises an opening (16), within which the milling tool (17) can be positioned by the electrical positioning device (18), wherein the opening (16) extends in particular over the first structure section (9) and the second structure section (11).

5. Milling device (10, 20) according to a preceding claim, wherein the second structure section (11) is pivotably mounted relative to the first structure section (9) about a/the pivot axis (15) and the pivot axis (15) intersects a displacement region of the milling tool (17) which is formed by the at least two positioning degrees of freedom (31, 32, 33).

6. Milling device (10, 20) according to a preceding claim, wherein one of the positioning degrees of freedom (33) runs in the axis direction of the rotation axis of the material-removing movement and/or orthogonally to the first contact plane, and/or wherein one of the positioning degrees of freedom (31, 32) runs orthogonally to the rotation axis of the material-removing movement and/or parallel to the first contact plane.

7. Milling device (10, 20) according to a preceding claim, wherein the positioning device (18) is designed to displace the milling tool (17) relative to the contact structure (8) along three in particular linear positioning degrees of freedom (31, 32, 33), wherein the positioning degrees of freedom (31, 32, 33) are preferably aligned orthogonally to one another.

8. Milling device (10, 20) according to claim 7, wherein the movement information defines the movement sequence along the three positioning degrees of freedom (31, 32, 33) and the movement sequence specifies the recess geometry with respect to the three positioning degrees of freedom (31, 32, 33).

9. Milling device (10, 20) according to one of the preceding claims, wherein a maximal displacement path for the positioning of the milling tool (17) along a positioning degree of freedom (31) which runs in a width direction (x) is at least 1.3 cm and/or a maximal displacement path for the positioning of the milling tool (17) along a positioning degree of freedom (32) which runs in a transverse direction (y) is at least 0.4 cm and/or a maximal displacement path for the positioning of the milling tool (17) along a positioning degree of freedom (33) which runs in the depth direction (z) is at least 1.1 cm.

10. Milling device (10, 20) according to one of the preceding claims, wherein the electronic control unit (37) comprises several different pieces of movement information, wherein each piece of movement information is assigned to a respective recess geometry, wherein the recess geometries differ from one another and wherein the control unit (37) is designed to control the positioning device (26) according to one of the pieces of movement information, in order to effect the creation of the recess with the recess geometry which is assigned to this piece of movement information.

11. Milling device (10) according to a preceding claim, comprising a housing (3) on which the handle (4) is arranged, wherein the extension of the housing (3) in a width direction (x) which is aligned orthogonally to the rotation axis of the material-removing movement is larger than the extension of the housing (3) in the direction of the rotation axis.

12. Method for the operation of a hand-held milling device (10, 20) according to one of the preceding claims, comprising the steps:
- positioning the milling device (10, 20) on the workpiece (2), so that the milling device (10, 20) bears simultaneously with both structure sections (9, 11) on the workpiece (2) in a stationary manner during the creation of the recess (1),
- controlling the electrical positioning device (26) according to the movement information, so that the electrical positioning device (26) brings the milling tool (17) into the movement sequence whilst the milling tool (17) carries out the rotative material-removing movement, in order to create the recess (1) with the predefined recess geometry.

13. Method according to claim 12, wherein the milling device (10, 20) simultaneously bears with both structure sections (9, 11) on the workpiece (2) in a stationary manner during the complete movement sequence.

14. Method according to claim 13, wherein the recess (1) comprises a connector hole (45) which runs out at a first workpiece surface (43) of the workpiece (2) and extends along a width direction (x), as well as an access hole (48), said access hole extending from the connector hole (45) to a second workpiece surface (44) of the workpiece (2) along a transverse direction (y) which is aligned orthogonally to the width direction (x) and running out at this second workpiece surface, and wherein the milling device (10, 20) simultaneously bears with both structure sections (9, 11) on the workpiece (2) in a stationary manner during the execution of the complete movement sequence with which the connector hole (45) as well as the access hole (48) is created.

15. Method according to claim 14, wherein the second structure section (11) is pivotably mounted relative to the first structure section (9) about a/the pivot axis (15) and the pivot axis (15) intersects a displacement region of the milling tool (17) which is formed by the at least two positioning degrees of freedom (31, 32, 33), and wherein the milling tool (17) is displaced through the pivot axis (15) on creating the access hole (48).

## Revendications

1. Dispositif de fraisage portatif (10, 20) destiné à réaliser un renfoncement (1) dans une pièce à usiner (2), comprenant :
une poignée (4) destinée à saisir le dispositif de fraisage (10, 20) et destinée à positionner le dispositif de fraisage (10, 20) par rapport à la pièce à usiner (2),
un système d'appui (6) avec une structure d'appui (8), qui comprend une première section de structure (9) et une deuxième section de structure (11) pour un appui fixe simultané sur la pièce à usiner (2) pendant la réalisation du renfoncement (1), dans lequel la première section de structure (9) définit un premier plan d'appui et la deuxième section de structure (11) définit un deuxième plan d'appui, et dans lequel la deuxième section de structure (11) est montée de manière à pouvoir pivoter par rapport à la première section de structure (9) et peut être fixée dans une multitude de positions de pivotement différentes par rapport à la première section de structure (9) pour régler entre les plans d'appui un angle fixe (12) adapté à la pièce à usiner (2),
un outil de fraisage (17),
un système d'entraînement électrique (27), qui est réalisé pour amener l'outil de fraisage (17) dans un mouvement rotatif d'enlèvement de copeaux,
un système électrique de positionnement (26), qui est réalisé pour déplacer l'outil de fraisage (17) le long d'au moins deux degrés de liberté de positionnement (31, 32, 33) en particulier linéaires par rapport à la structure d'appui (8),
une unité de commande électronique (37), qui est réalisée pour piloter le système électrique de positionnement (26) selon une information de mouvement, de telle sorte que le système électrique de positionnement (26) amène l'outil de fraisage (17) dans une séquence de mouvements définie par l'information de mouvement le long des au moins deux degrés de liberté de positionnement (31, 32, 33) tandis que l'outil de fraisage (17) effectue le mouvement rotatif d'enlèvement de copeaux pour réaliser le renfoncement (1) avec une géométrie de renfoncement prédéfinie.

2. Dispositif de fraisage (10, 20) selon la revendication 1, dans lequel la deuxième section de structure (11) peut être pivotée autour d'un axe de pivotement (15) orienté orthogonalement par rapport à l'axe de rotation du mouvement d'enlèvement de copeaux.

3. Dispositif de fraisage (10, 20) selon la revendication 1 ou 2, comprenant en outre une poignée (22) de structure d'appui disposée sur la deuxième section de structure (11), par l'intermédiaire de laquelle la deuxième section de structure (11) peut être pivotée par rapport à la première section de structure (9).

4. Dispositif de fraisage (10, 20) selon une revendication précédente, dans lequel la structure d'appui (8) présente une ouverture (16), à l'intérieur de laquelle l'outil de fraisage (17) peut être positionné par le système de positionnement électrique (18), dans lequel l'ouverture (16) s'étend en particulier sur la première section de structure (9) et la deuxième section de structure (11).

5. Dispositif de fraisage (10, 20) selon une revendication précédente, dans lequel la deuxième section de structure (11) est montée de manière à pouvoir pivoter autour d'un/de l'axe de pivotement (15) par rapport à la première section de structure (9) et l'axe de pivotement (15) coupe une plage de déplacement de l'outil de fraisage (17) formée par les au moins deux degrés de liberté de positionnement (31, 32, 33).

6. Dispositif de fraisage (10, 20) selon une revendication précédente, dans lequel un des degrés de liberté de positionnement (33) s'étend dans la direction axiale de l'axe de rotation du mouvement d'enlèvement de copeaux et/ou orthogonalement au premier plan d'appui, et/ou dans lequel un des degrés de liberté de positionnement (31, 32) s'étend orthogonalement à l'axe de rotation du mouvement d'enlèvement de copeaux et/ou parallèlement au premier plan d'appui.

7. Dispositif de fraisage (10, 20) selon une revendication précédente, dans lequel le système de positionnement (18) est réalisé pour fraiser l'outil de fraisage (17) le long de trois degrés de liberté de positionnement (31, 32, 33) en particulier linéaires par rapport à la structure d'appui (8), dans lequel les degrés de liberté de positionnement (31, 32, 33) sont de préférence orientés orthogonalement les uns par rapport aux autres.

8. Dispositif de fraisage (10, 20) selon la revendication 7, dans lequel l'information de mouvement définit la séquence de mouvements le long des trois degrés de liberté de positionnement (31, 32, 33) et la séquence de mouvements spécifie la géométrie de renfoncement par rapport aux trois degrés de liberté de positionnement (31, 32, 33).

9. Dispositif de fraisage (10, 20) selon l'une quelconque des revendications précédentes, dans lequel une course de déplacement maximale pour le positionnement de l'outil de fraisage (17) le long d'un degré de liberté de positionnement (31) s'étendant dans un sens de la largeur (x) est d'au moins 1,3 cm et/ou une course de déplacement maximale pour le positionnement de l'outil de fraisage (17) le long d'un degré de liberté de positionnement (32) s'étendant dans une direction transversale (y) est d'au moins 0,4 cm et/ou une course de déplacement maximale pour le positionnement de l'outil de fraisage (17) le long d'un degré de liberté de positionnement (33) s'étendant dans un sens de la profondeur (z) est d'au moins 1,1 cm.

10. Dispositif de fraisage (10, 20) selon l'une quelconque des revendications précédentes, dans lequel l'unité de commande électronique (37) dispose de plusieurs informations de mouvement différentes, dans lequel chaque information de mouvement est associée à une géométrie de renfoncement respective, dans lequel les géométries de renfoncement sont différentes les unes des autres, et dans lequel l'unité de commande (37) est réalisée pour piloter le système de positionnement (26) selon l'une des informations de mouvement pour entraîner la réalisation du renfoncement avec la géométrie de renfoncement associée à ladite information de mouvement.

11. Dispositif de fraisage (10) selon une revendication précédente, comprenant un boîtier (3), sur lequel est disposée la poignée (4), dans lequel l'extension du boîtier (3) dans un sens de la largeur (x) orienté orthogonalement à l'axe de rotation du mouvement d'enlèvement de copeaux est supérieure à l'extension du boîtier (3) en direction de l'axe de rotation.

12. Procédé destiné à faire fonctionner un dispositif de fraisage (10, 20) portatif selon l'une quelconque des revendications précédentes, comprenant les étapes :
- de positionnement du dispositif de fraisage (10, 20) sur la pièce à usiner (2) de telle sorte que le dispositif de fraisage (10, 20) repose de manière fixe sur la pièce à usiner (2) pendant la réalisation du renfoncement (1) simultanément avec les deux sections de structure (9, 11)
- de pilotage du système électrique de positionnement (26) selon l'information de mouvement, de telle sorte que le système électrique de positionnement (26) amène l'outil de fraisage (17) dans la séquence de mouvements, tandis que l'outil de fraisage (17) effectue le mouvement rotatif d'enlèvement de copeaux pour réaliser le renfoncement (1) avec la géométrie de renfoncement spécifiée.

13. Procédé selon la revendication 12, dans lequel le dispositif de fraisage (10, 20) repose de manière fixe sur la pièce à usiner (2) pendant toute la séquence de mouvements simultanément avec les deux sections de structure (9, 11).

14. Procédé selon la revendication 13, dans lequel le renfoncement (1) comprend un trou de connexion (45) débouchant sur une surface de pièce à usiner (43) de la pièce à usiner (2), s'étendant le long d'un sens de la largeur (x) ainsi qu'un trou d'accès (48), qui s'étend depuis le trou de connexion (45) le long d'une direction transversale (y) orientée orthogonalement au sens de la largeur (x) vers une deuxième surface de pièce à usiner (44) de la pièce à usiner (2) et débouche sur celle-ci, et dans lequel le dispositif de fraisage (10, 20) repose de manière fixe sur la pièce à usiner (2) simultanément avec les deux sections de structure (9, 11) pendant l'exécution de toute la séquence de mouvements, par laquelle le trou de connexion (45) et le trou d'accès (48) également sont réalisés.

15. Procédé selon la revendication 14, dans lequel la deuxième section de structure (11) est montée de manière à pouvoir être pivotée par rapport à la première section de structure (9) autour d'un/de l'axe de pivotement (15) et l'axe de pivotement (15) coupe une zone de déplacement de l'outil de fraisage (17) formée par les au moins deux degrés de liberté de positionnement (31, 32, 33), et dans lequel l'outil de fraisage (17) est déplacé à travers l'axe de pivotement (15) lors de la réalisation du trou d'accès (48).
